# EUROPEAN PATENT APPLICATION

(11) **EP 4 703 059 A1**
(43) Date of publication of application: **04.03.2026**
(21) Application number: 24797074.2
(22) Date of filing: 24.04.2024
(51) Int. Cl.: B21D 22/20, B21D 22/26, B62D 25/02, B62D 25/04, B62D 25/20, C21D 9/00

(54) **BLANK, METHOD FOR MANUFACTURING STRUCTURAL MEMBER, AND STRUCTURAL MEMBER**

(30) Priority: 28.04.2023 JP 2023075317
(71) Applicant: NIPPON STEEL CORPORATION, Chiyoda-ku Tokyo 100-8071 (JP)
(72) Inventor: KIMOTO, Naoki, Tokyo 100-8071 (JP); KUBO, Masahiro, Tokyo 100-8071 (JP); IGUCHI, Keinosuke, Tokyo 100-8071 (JP); YOSHIDA, Hiroshi, Tokyo 100-8071 (JP); IRIKAWA, Hideaki, Tokyo 100-8071 (JP); FUJITA, Soshi, Tokyo 100-8071 (JP); SUZUKI, Yuki, Tokyo 100-8071 (JP)
(74) Representative: Zimmermann & Partner Patentanwälte mbB
(86) International application number: PCT/JP2024/016111
(87) International publication number: WO 2024/225328

(57) **Abstract**

A blank (20, 20A, 20B, 20C) for hot stamping includes multiple steel sheets. The multiple steel sheets are disposed to form an annular shape in plan view of the blank (20, 20A, 20B, 20C) and joined to each other. The multiple steel sheets include steel sheets (21, 22). A first steel sheet (21) has the smallest sheet thickness (tₘᵢₙ). The sheet thickness of the second steel sheet (22) is larger than the sheet thickness (tₘᵢₙ) of the first steel sheet (21). The steel sheets (21, 22) are each a plated steel sheet that has a base steel sheet (21a, 22a) and an aluminum-based plating layer (21b, 22b). The deposition amount (W1) of the plating layer (21b) of the first steel sheet (21) is less than the deposition amount (W2) of the plating layer (22b) of the second steel sheet (22).

## Description

### TECHNICAL FIELD

The present disclosure relates to a blank for hot stamping. The present disclosure further relates to a production method for a structural member using the blank, and the structural member.

### BACKGROUND ART

Structures such as a body of an automobile are formed of multiple structural members. A structural member is produced by press-forming a blank, for example. In order to ensure high strength and high dimensional accuracy, the structural member may be produced in a press forming method referred to as hot stamping. The hot stamping is a technique of heating a blank, which is a steel sheet, to a temperature in the austenite zone, press-forming the blank with press tooling, and quenching the blank by holding the blank in the press tooling for heat dissipation (rapid cooling).

Patent literature 1 discloses an overlapped blank for hot stamping. The overlapped blank of Patent Literature 1 includes a first steel sheet and a second steel sheet having a smaller area than the first steel sheet. The second steel sheet is overlaid on a surface of the first steel sheet and welded to the first steel sheet. Both the first steel sheet and the second steel sheet are aluminum-plated steel sheets, and the deposition amount of the plating layer on both surfaces is 20 g/m² or more and 120 g/m² or less. Provided that the mean deposition amount of the aluminum-based plating layer on both surfaces of the first steel sheet is W1, the deposition amount of the aluminum-based plating layer on the surface of the second steel sheet that is not in contact with the first steel sheet is W2, the sheet thickness of the first steel sheet is t1, and the sheet thickness of the second steel sheet is t2, the overlapped blank of Patent Literature 1 satisfies relations that 30 ≤ (W1-W2) ≤ 100 and (W1/W2)² × (t1/t2) ≥ 1.5. According to Patent Literature 1, by satisfying these relations, the alloying reaction of the plating layer that increases emissivity can quickly proceed to the surface in the overlap part between the first steel sheet and the second steel sheet in heating for hot stamping.

Patent Literature 2 discloses a method of producing a body side structural frame of an automobile from multiple blanks. According to Patent Literature 2, multiple blanks are joined to form a composite blank, and the composite blank is press-formed to produce a body side structural frame. In Patent Literature 2, hot forming (hot stamping) of the composite blank is described.

### CITATION LIST

### PATENT LITERATURE

Patent Literature 1: Japanese Patent No. 6642777
Patent Literature 2: Japanese Translation of PCT International Application Publication No. 2021-528248

### SUMMARY OF INVENTION

### TECHNICAL PROBLEM

In recent years, to simplify production processes for structures, integration of two or more members at the stage of a blank has been studied. For example, Patent Literature 2 discloses that a composite blank having an annular shape in plan view is subjected to hot stamping, thereby producing an annular body side structural frame including a pillar, a rocker and the like integrated with each other. However, when the composite blank includes steel sheets having different sheet thicknesses, the performance of the produced structural member may decrease. Specifically, for hot stamping, the blank is heated in a heating furnace until the microstructure thereof is austenitized, and then shaped with press tooling. However, a steel sheet having a smaller sheet thickness is more quickly cooled than a steel sheet having a larger sheet thickness. Therefore, in the part of the blank in which the steel sheet having a smaller sheet thickness is arranged, transformation to ferrite may start before the blank starts being shaped after removed from the heating furnace, and the hardenability may deteriorate. The local deterioration of the hardenability of the blank may lead to unevenness of the hardness of the structural member produced from the blank and a decrease in shock absorption performance thereof. In addition, the local deterioration of the hardenability leads to unevenness of stress in the structural member. As a result, particularly when the structural member has an annular shape, torsion is likely to occur, and the dimensional accuracy may deteriorate. The larger the annular structural member, the more marked the decrease in shock absorption performance (collision resistance performance) due to the deterioration of the hardenability or dimensional accuracy.

An object of the present disclosure is to provide a blank for hot stamping that can improve the performance of a structural member having an annular shape produced from the blank, in particular, a large structural member having an annular shape produced from the blank, that includes a steel sheet having a smaller sheet thickness than other steel sheets.

### SOLUTION TO PROBLEM

A blank for hot stamping according to the present disclosure includes multiple steel sheets. The multiple steel sheets are disposed to form an annular shape in plan view of the blank and joined to each other. The multiple steel sheets include a first steel sheet and a second steel sheet. The first steel sheet has a smallest sheet thickness among the multiple steel sheets. The second steel sheet has a sheet thickness larger than the sheet thickness of the first steel sheet. The first steel sheet and the second steel sheet are each a plated steel sheet. The plated steel sheet has a base steel sheet and an aluminum-based plating layer. The aluminum-based plating layer covers both surfaces of the base steel sheet. A deposition amount (g/m²) of the aluminum-based plating layer on both surfaces of the base steel sheet of the first steel sheet is less than a deposition amount (g/m²) of the aluminum-based plating layer on both surfaces of the base steel sheet of the second steel sheet.

### ADVANTAGEOUS EFFECTS OF INVENTION

With the blank for hot stamping according to the present disclosure, when a structural member having an annular shape, in particular, a large structural member having an annular shape, that includes a steel sheet having a smaller sheet thickness than other steel sheets is produced from the blank, the performance of the structural member can be improved.

### BRIEF DESCRIPTION OF THE DRAWINGS

[FIG. 1] FIG. 1 is a plan view of a structural member according to a first embodiment.
[FIG. 2] FIG. 2 is a cross-sectional view taken along the line II-II in FIG. 1.
[FIG. 3A] FIG. 3A is a schematic diagram for illustrating a production method for the structural member according to the first embodiment, showing a blank according to the first embodiment.
[FIG. 3B] FIG. 3B is a schematic diagram for illustrating the production method for the structural member according to the first embodiment, showing the blank according to the first embodiment.
[FIG. 3C] FIG. 3C is a schematic diagram for illustrating the production method for the structural member according to the first embodiment, showing the blank according to the first embodiment.
[FIG. 3D] FIG. 3D is a schematic diagram for illustrating the production method for the structural member according to the first embodiment, showing the blank according to the first embodiment.
[FIG. 3E] FIG. 3E is a schematic diagram for illustrating the production method for the structural member according to the first embodiment.
[FIG. 3F] FIG. 3F is a schematic diagram for illustrating the production method for the structural member according to the first embodiment.
[FIG. 3G] FIG. 3G is a schematic diagram for illustrating the production method for the structural member according to the first embodiment.
[FIG. 4A] FIG. 4A is a cross-sectional view of the structural member produced in the production method according to the first embodiment.
[FIG. 4B] FIG. 4B is another cross-sectional view of the structural member produced in the production method according to the first embodiment.
[FIG. 4C] FIG. 4C is another cross-sectional view of the structural member produced in the production method according to the first embodiment.
[FIG. 5] FIG. 5 is a plan view of a blank according to a second embodiment.
[FIG. 6] FIG. 6 is a cross-sectional view taken along the line VI-VI in FIG. 5.
[FIG. 7] FIG. 7 is a plan view of a structural member according to the second embodiment.
[FIG. 8] FIG. 8 is a cross-sectional view of a blank according to a third embodiment.
[FIG. 9] FIG. 9 is a cross-sectional view of a blank according to a fourth embodiment.
[FIG. 10] FIG. 10 is a plan view of a structural member according to a variation of each embodiment.
[FIG. 11A] FIG. 11A is a diagram showing a division pattern of a structural member in a first example.
[FIG. 11B] FIG. 11B is a diagram showing another division pattern of the structural member in the first example.
[FIG. 11C] FIG. 11C is a diagram showing another division pattern of the structural member in the first example.
[FIG. 11D] FIG. 11D is a diagram showing another division pattern of the structural member in the first example.
[FIG. 11E] FIG. 11E is a diagram showing another division pattern of the structural member in the first example.
[FIG. 11F] FIG. 11F is a diagram showing another division pattern of the structural member in the first example.
[FIG. 11G] FIG. 11G is a diagram showing another division pattern of the structural member in the first example.
[FIG. 12A] FIG. 12A is a diagram showing a division pattern of a structural member in a second example.
[FIG. 12B] FIG. 12B is a diagram showing another division pattern of the structural member in the second example.
[FIG. 12C] FIG. 12C is a diagram showing another division pattern of the structural member in the second example.
[FIG. 12D] FIG. 12D is a diagram showing another division pattern of the structural member in the second example.

### DESCRIPTION OF EMBODIMENTS

A blank for hot stamping according to an embodiment includes multiple steel sheets. The multiple steel sheets are disposed to form an annular shape in plan view of the blank and joined to each other. The multiple steel sheets include a first steel sheet and a second steel sheet. The first steel sheet has a smallest sheet thickness among the multiple steel sheets. The second steel sheet has a sheet thickness larger than the sheet thickness of the first steel sheet. The first steel sheet and the second steel sheet are each a plated steel sheet. The plated steel sheet has a base steel sheet and an aluminum-based plating layer. The aluminum-based plating layer covers both surfaces of the base steel sheet. A deposition amount (g/m²) of the aluminum-based plating layer on both surfaces of the base steel sheet of the first steel sheet is less than a deposition amount (g/m²) of the aluminum-based plating layer on both surfaces of the base steel sheet of the second steel sheet (a first configuration).

The blank according to the first configuration includes the first steel sheet having the smallest sheet thickness and the second steel sheet having a sheet thickness larger than the sheet thickness of the first steel sheet. Both the first steel sheet and the second steel sheet are plated steel sheets having an aluminum-based plating layer. However, the deposition amount of the aluminum-based plating layer on both surfaces of the base steel sheet is less in the first steel sheet than in the second steel sheet. As a result, when the blank is heated for hot stamping, alloying of the aluminum-based plating layer with iron more quickly proceeds to the surface in the thinner first steel sheet than in the thicker second steel sheet, and both surfaces of the first steel sheet changes color from white silver to black or a color close to black. Therefore, the emissivity of both surfaces of the first steel sheet becomes higher than the emissivity of both surfaces of the second steel sheet. Therefore, the first steel sheet can be more quickly heated to a temperature in the austenite zone, and a longer retention time of the first steel sheet at the temperature can be ensured. Thus, the austenite grain in the first steel sheet can be coarsened. As a result, the ferrite transformation region (ferrite nose) in the CCT diagram shifts to longer times, and therefore, the transformation to ferrite in the first steel sheet after the end of heating of the blank can be delayed, and shaping of the blank can be started while the microstructure of the first steel sheet is kept in the austenite phase. That is, the hardenability of the first steel sheet having the small sheet thickness can be improved.

With the blank according to the first configuration, since the hardenability of the first steel sheet having the small sheet thickness is improved, the first steel sheet can be quenched well when shaping the blank into the structural member by hot stamping. Therefore, the hardness of the structural member is likely to be made uniform, and a local decrease in strength of the structural member can be prevented. In addition, unevenness of stress in the structural member is less likely to occur, so that even when the produced structural member has an annular shape, torsion is less likely to occur, and high dimensional accuracy can be ensured in the structural member. Therefore, when an annular structural member, in particular, a large annular structural member, that includes the first steel sheet having a smaller sheet thickness than the second steel sheet is produced from the blank, the failure in strength and the failure in dimensional accuracy of the structural member can be reduced, and the shock absorption performance (collision resistance performance) of the structural member can be improved.

With the blank according to the first configuration, the deposition amount of the aluminum-based plating layer of the first steel sheet having the smallest sheet thickness is less than the deposition amount of the aluminum-based plating layer of the second steel sheet having a larger sheet thickness. In this case, the first steel sheet can be more quickly heated than the second steel sheet, and the high temperature retention time of the first steel sheet, that is, the time from when the first steel sheet reaches a temperature in the austenite zone to when the second steel sheet and the whole of the blank reach the temperature in the austenite zone, is longer than when the deposition amounts of the aluminum-based plating layer of the first steel sheet and the second steel sheet are equal to each other. Therefore, after the heating of the blank ends, unevenness of the phase transformation due to the difference in cooling rate between the steel sheets can be reduced. Specifically, the start of the phase transformation from austenite to ferrite of the first steel sheet having the smallest sheet thickness can be delayed, so that the difference in start time of phase transformation between the first steel sheet having the smallest sheet thickness and the other steel sheets is reduced. As a result, the hardenability of the first steel sheet having the smallest sheet thickness and the other steel sheets can be made uniform.

In the blank according to the first configuration, provided that the sheet thickness of the first steel sheet is tₘᵢₙ, and a sheet thickness of a steel sheet having a largest sheet thickness among the multiple steel sheets is tₘₐₓ, it is preferred that 1.0 < tₘₐₓ/tₘiₙ ≤ 3.2 (a second configuration).

Among the multiple steel sheets included in the blank, when the difference in sheet thickness between the first steel sheet having the smallest sheet thickness tₘᵢₙ and another steel sheet having the largest sheet thickness tₘₐₓ is large, a process window is difficult to ensure in production of the structural member. For example, when the difference between the smallest sheet thickness tₘᵢₙ and the largest sheet thickness tₘₐₓ is large, when the blank is heated for hot stamping, alloying of the aluminum-based plating layer may excessively proceed and the diffusion layer may become thicker in the first steel sheet having been heated earlier to a temperature in the austenite zone while waiting for the steel sheet having the largest sheet thickness tₘₐₓ to reach the temperature in the austenite zone, and thus, the corrosion resistance or the weldability of the plating layer of the first steel sheet may be unable to be ensured. In view of this, according to the second configuration, the ratio of the largest sheet thickness tₘₐₓ to the smallest sheet thickness tₘᵢₙ is set to be 3.2 or less. In this way, the heating rate of the steel sheet having the largest sheet thickness tₘₐₓ and the heating rate of the first steel sheet having the smallest sheet thickness tₘᵢₙ are not excessively different, so that the heating of the other steel sheets can be ended before alloying of the aluminum-based plating layer of the first steel sheet excessively proceeds. Therefore, the structural member can be produced while maintaining the corrosion resistance or the weldability of the first steel sheet, and a process window can be ensured in the production of the structural member.

The blank according to the first or second configuration may further include an overlap part. The overlap part is formed by end parts of adjacent two steel sheets among the multiple steel sheets overlaid on one another. The overlap part has a total sheet thickness of 4.0 mm or less, for example. The two steel sheets may be each a plated steel sheet that has a base steel sheet and an aluminum-based plating layer that covers both surfaces of the base steel sheet. In this case, it is preferred that a deposition amount (g/m²) of the aluminum-based plating layer on both surfaces of the base steel sheet of each of the two steel sheets is less than the deposition amount (g/m²) of the aluminum-based plating layer on both surfaces of the base steel sheet of the second steel sheet (a third configuration).

When the blank includes the overlap part formed by end parts of two steel sheets overlaid on one another, a process window may be unable to be ensured in production of the structural member. Specifically, when the blank is heated for hot stamping, alloying of the aluminum-based plating layer of the first steel sheet having the smallest sheet thickness may proceed and the diffusion layer may become thicker while waiting for the overlap part to reach a temperature in the austenite zone, and thus, the corrosion resistance or the weldability of the first steel sheet may be unable to be ensured by the plating layer. In view of this, according to the third configuration, the deposition amount of the aluminum-based plating layer on both surfaces of the base steel sheet in each of the steel sheets forming the overlap part is less than the deposition amount in the second steel sheet. In this way, heating of the overlap part can be promoted, so that the heating of the overlap part can be ended before alloying of the plating layer of the first steel sheet excessively proceeds, and the structural member can be produced while maintaining the corrosion resistance or the weldability of the first steel sheet. That is, a process window is more likely to be ensured in the production of the structural member. In addition, according to the third configuration, since the total sheet thickness of the overlap part is limited to 4.0 mm or less, the heating of the overlap part is prevented from being too slow compared with the heating of the first steel sheet, and a process window is more likely to be ensured.

In the blank according to the third configuration, a surface of at least one of the two steel sheets that is located on an outer side of the overlap part may be coated with a film that is black in color (a fourth configuration).

According to the fourth configuration, the surface of at least one of the two steel sheets forming the overlap part that is located on the outer side of the overlap part is provided with a film that is black in color. In this way, the emissivity of the overlap part can be increased, and the heating thereof can be promoted. Therefore, a process window is more likely to be ensured in the production of the structural member.

In the blank according to any of the first to fourth configurations, at least one surface of the first steel sheet may be coated with a film that is black in color (a fifth configuration).

According to the fifth configuration, at least one surface of the first steel sheet having the smallest sheet thickness is provided with a film that is black in color. In this way, the emissivity of the surface of the first steel sheet can be increased in advance, so that when the blank is heated in hot stamping, the first steel sheet is more quickly heated. Therefore, a longer high temperature retention time of the first steel sheet can be ensured, and coarsening of the austenite grain in the first steel sheet can be promoted. As a result, the hardenability of the first steel sheet having the small sheet thickness can be further improved.

A production method for a structural member according to an embodiment includes a step of preparing the blank according to any one of the first to fifth configurations, a step of heating the multiple steel sheets included in the blank to an austenite transformation completion temperature or higher, and a step of shaping and quenching the heated blank into a structural member having an annular shape in plan view with press tooling (a sixth configuration).

A structural member according to an embodiment includes a member main body. The member main body is formed of multiple steel sheets joined to each other and has an annular shape in plan view. The multiple steel sheets include a first steel sheet having a smallest sheet thickness and a second steel sheet having a sheet thickness larger than the sheet thickness of the first steel sheet. The first steel sheet and the second steel sheet are each a plated steel sheet that has an aluminum-based plating layer on both surfaces of a base steel sheet. A thickness of the aluminum-based plating layer of the first steel sheet is smaller than a thickness of the aluminum-based plating layer of the second steel sheet (a seventh configuration).

The structural member according to the seventh configuration may be a door ring part of an automobile. The member main body may include a front pillar, a center pillar and a rocker that connects the front pillar and the center pillar to each other (an eighth configuration).

In the following, embodiments of the present disclosure will be described with reference to the drawings. In the drawings, the same or corresponding components are denoted by the same reference numerals, and redundant descriptions will be omitted.

### <First Embodiment>

### [Structural Member]

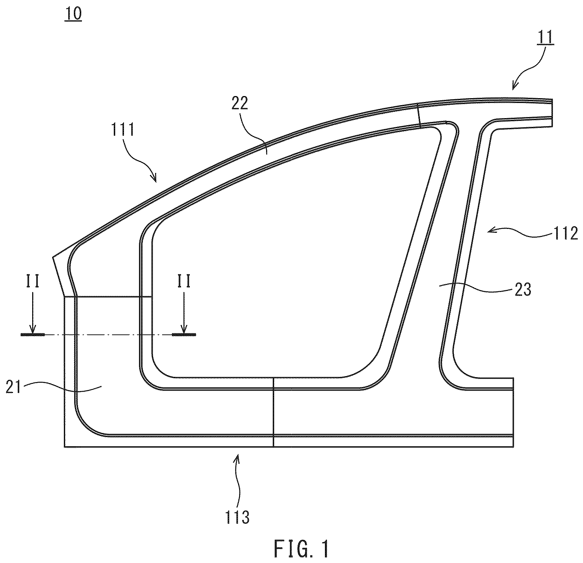

FIG. 1 is a diagram (plan view) showing a structural member 10 according to a first embodiment placed on a horizontal surface viewed from above. The structural member 10 is used for a body of an automobile, for example. The structural member 10 is typically a door ring part of an automobile. This embodiment will be described with reference to an example in which the structural member 10 is a door ring part.

The structural member 10 is a hot-stamped member. That is, the structural member 10 is produced by performing hot stamping (hot press working) on a blank formed of multiple steel sheets. The structural member 10 includes a member main body 11. The member main body 11 has an annular shape in plan view of the structural member 10. The member main body 11 includes a front pillar 111, a center pillar 112 and a rocker 113. When the structural member 10 is assembled to the body of the automobile, the center pillar 112 is disposed rearward of the front pillar 111. The center pillar 112 generally extends in the up-and-down direction of the body. The front pillar 111 extends toward the center pillar 112. When the structural member 10 is assembled to the body of the automobile, the rocker 113 is disposed below the front pillar 111 and the center pillar 112. The rocker 113 connects the front pillar 111 and the center pillar 112 to each other.

In this embodiment, the member main body 11 is formed of multiple steel sheets 21, 22 and 23 joined to each other. In the example in FIG. 1, the front pillar 111 is mainly formed of the steel sheets 21 and 22. The center pillar 112 is mainly formed of the steel sheet 23. The rocker 113 is formed of the steel sheets 21 and 23.

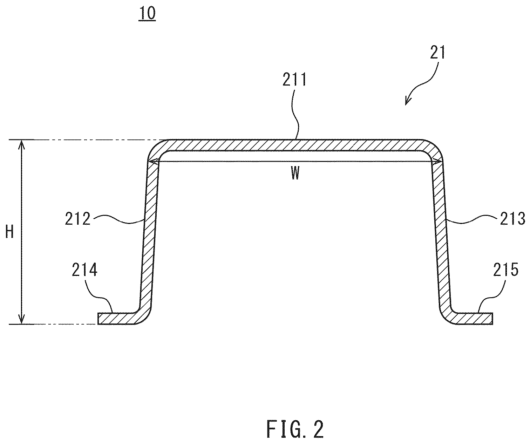

FIG. 2 is a cross-sectional view taken along the line II-II in FIG. 1. FIG. 2 shows a cross section of the structural member 10 taken at the position of the steel sheet 21 along the sheet thickness direction thereof. As shown in FIG. 2, the steel sheet 21 has an open cross section. The steel sheet 21 has a generally hat-like shaped in cross-sectional view of the structural member 10, for example. More specifically, the steel sheet 21 includes a top plate 211, vertical walls 212 and 213 and flanges 214 and 215. The vertical wall 212 is disposed on the opposite side of the top plate 211 to the vertical wall 213. In the cross-sectional view of the structural member 10, one ends of the vertical walls 212 and 213 are connected to the top plate 211. In the cross-sectional view of the structural member 10, the other ends of the vertical walls 212 and 213 are connected to the flanges 214 and 215, respectively. The flanges 214 and 215 project outward from the vertical walls 212 and 213 of the structural member 10, respectively.

In the structural member 10, a width W of the steel sheet 21 may be 30 mm or more and 750 mm or less. A height H of the steel sheet 21 may be 25 mm or more and 150 mm or less. The width W is the distance from the R-end on the vertical wall 212 side of the corner part between the top plate 211 and the vertical wall 212 to the R-end on the vertical wall 213 side of the corner part between the top plate 211 and the vertical wall 213, in the cross section of the structural member 10. The height H is the distance from the top plate 211 to the flange 214 or 215 in the sheet thickness direction of the top plate 211.

Although not shown, the other steel sheets 22 and 23 have an open cross section, as with the steel sheet 21. The steel sheets 22 and 23 can also have a generally hat-like shaped in cross-sectional view of the structural member 10. The width of each of the steel sheets 22 and 23 may be 15 mm or more and 300 mm or less. The height of each of the steel sheets 22 and 23 may be 10 mm or more and 150 mm or less.

The size of the structural member 10 having an annular shape in plan view is 1.0 m or more, for example. The size of the structural member 10 may be 4.0 m or less, for example. The size of the structural member 10 means the length of the line segment connecting two points that are the most distant from each other among any two points on the outer circumference of the structural member 10 when the structural member 10 placed on a horizontal surface is viewed in the vertical direction.

### [Production Method for Structural Member]

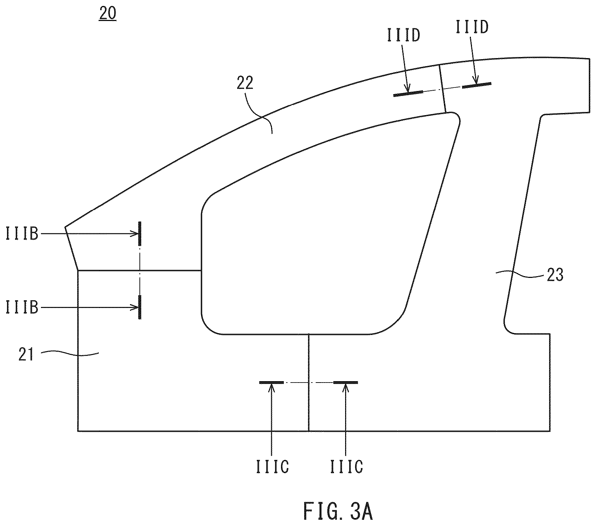

In the following, a production method for the structural member 10 will be described with reference to FIGS. 3A to 3G. The production method for the structural member 10 according to this embodiment includes a step of preparing a blank 20, a step of heating the blank 20 and a step of shaping the heated blank 20 into the structural member 10.

### (Preparation Step)

As shown in FIG. 3A, in the preparation step, a blank 20 having the expanded shape of the structural member 10 is prepared. The blank 20 includes multiple steel sheets 21, 22 and 23. The steel sheets 21, 22 and 23 are disposed to form an annular shape in plan view of the blank 20 and joined to each other.

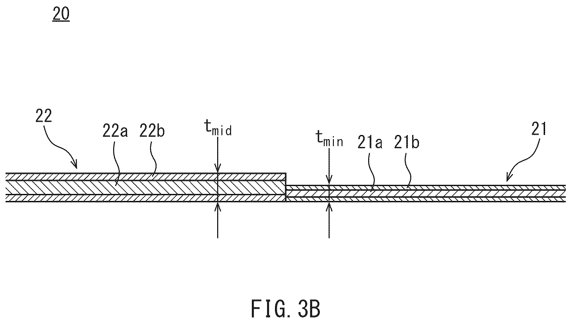

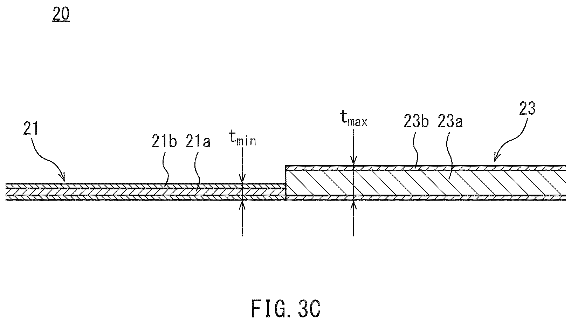

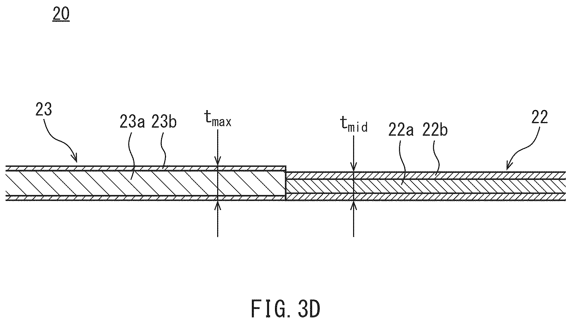

FIGS. 3B, 3C and 3D are cross-sectional views of the blank 20, showing junctures between the steel sheets 21, 22 and 23. FIGS. 3B, 3C and 3D are cross-sectional views taken along the lines IIIB-IIIB, IIIC-IIIC and IIID-IIID in FIG. 3A, respectively. With reference to FIGS. 3B and 3C, the steel sheet 21 is butt-joined to each of the steel sheets 22 and 23. That is, an end face of the steel sheet 21 abuts on and is joined to an end face of the steel sheet 22, and another end face of the steel sheet 21 abuts on and is joined to an end face of the steel sheet 23. With reference to FIG. 3D, the steel sheet 22 is butt-joined not only to the steel sheet 21 but also to the steel sheet 23. An end face of the steel sheet 22 abuts on and is joined to an end face of the steel sheet 23. The steel sheets 21, 22 and 23 are joined to each other by laser welding, for example. In this embodiment, the blank 20 is a so-called tailor welded blank.

With reference to FIGS. 3B and 3C, among the steel sheets 21, 22 and 23, the steel sheet 21 has the smallest sheet thickness tₘᵢₙ. The steel sheet 22 has a sheet thickness larger than the sheet thickness tₘᵢₙ of the steel sheet 21. The steel sheet 23 has a sheet thickness equal to or larger than the sheet thickness tₘᵢₙ of the steel sheet 21. In the example of this embodiment, the steel sheets 22 and 23 each have a sheet thickness larger than the sheet thickness tₘᵢₙ of the steel sheet 21. In this embodiment, the steel sheet 23 has the largest sheet thickness tₘₐₓ among the steel sheets 21, 22 and 23. The steel sheet 22 has a sheet thickness t_{mid} larger than the sheet thickness tₘᵢₙ of the steel sheet 21 and smaller than the sheet thickness tₘₐₓ of the steel sheet 23. However, the steel sheet 22 may have a sheet thickness equal to or larger than the sheet thickness of the steel sheet 23. That is, the steel sheet 22 may have the largest sheet thickness tₘₐₓ among the steel sheets 21, 22 and 23.

The sheet thickness tₘᵢₙ of the steel sheet 21 is typically less than 1.4 mm. The sheet thickness tₘᵢₙ may be 0.8 mm or more, for example. The sheet thickness tₘᵢₙ of the steel sheet 21 and the sheet thickness tₘₐₓ of the steel sheet 23 preferably satisfy a condition that 1.0 < tₘₐₓ/tₘiₙ ≤ 3.2, and more preferably satisfy a condition that 1.3 ≤ tₘₐₓ/tₘᵢₙ ≤ 3.2.

Each of the steel sheets 21, 22 and 23 is a plated steel sheet, more specifically, an aluminum-plated steel sheet. The steel sheet 21 has a base steel sheet 21a and an aluminum-based plating layer 21b. The steel sheet 22 has a base steel sheet 22a and an aluminum-based plating layer 22b. The steel sheet 23 has a base steel sheet 23a and an aluminum-based plating layer 23b. The sheet thickness tₘᵢₙ of the steel sheet 21 is the total sheet thickness of the base steel sheet 21a and the aluminum-based plating layer 21b and is a mean sheet thickness of the steel sheet 21. The sheet thickness t_{mid} of the steel sheet 22 is the total sheet thickness of the base steel sheet 22a and the aluminum-based plating layer 22b and is a mean sheet thickness of the steel sheet 22. The sheet thickness tₘₐₓ of the steel sheet 23 is the total sheet thickness of the base steel sheet 23a and the aluminum-based plating layer 23b and is a mean sheet thickness of the steel sheet 23.

The type of the base steel sheets 21a, 22a and 23a is not particularly limited. Each of the base steel sheets 21a, 22a and 23a may be the same as or different from the other base steel sheets.

In the steel sheet 21, the aluminum-based plating layer 21b covers both surfaces of the base steel sheet 21a. The aluminum-based plating layer 21b is provided over the whole or substantially the whole of both surfaces of the base steel sheet 21a. Similarly, in the steel sheet 22, the aluminum-based plating layer 22b covers both surfaces of the base steel sheet 22a. The aluminum-based plating layer 22b is provided over the whole or substantially the whole of both surfaces of the base steel sheet 22a. Furthermore, in the steel sheet 23, the aluminum-based plating layer 23b covers both surfaces of the base steel sheet 23a. The aluminum-based plating layer 23b is provided over the whole or substantially the whole of both surfaces of the base steel sheet 23a.

The chemical composition of the aluminum-based plating layers 21b, 22b and 23b is not particularly limited. As the aluminum-based plating layers 21b, 22b and 23b, a well-known aluminum-based plating layer (a plating layer primarily containing aluminum) can be used. Although this is not intended to be limited, the aluminum-based plating layers 21b, 22b and 23b are Al-Si-based plating layers, for example. Each of the aluminum-based plating layers 21b, 22b and 23b may be the same or different from the aluminum-based plating layers of the other steel sheets.

With reference to FIG. 3B, provided that the deposition amount of the aluminum-based plating layer 21b on both surfaces of the base steel sheet 21a of the steel sheet 21 having the smallest sheet thickness tₘᵢₙ is W1 (g/m²), and the deposition amount of the aluminum-based plating layer 22b on both surfaces of the base steel sheet 22a of the steel sheet 22 having the larger sheet thickness t_{mid} is W2 (g/m²), the deposition amount W1 of the aluminum-based plating layer 21b of the steel sheet 21 is less than the deposition amount W2 of the aluminum-based plating layer 22b of the steel sheet 22. The deposition amount W1 of the aluminum-based plating layer 21b of the steel sheet 21 is a mean deposition amount on both surfaces of the base steel sheet 21a. Typically, the deposition amount (g/m²) of the aluminum-based plating layer 21b on one surface of the base steel sheet 21a is substantially equal to the deposition amount (g/m²) of the aluminum-based plating layer 21b on the other surface of the base steel sheet 21a. However, the deposition amount of the aluminum-based plating layer 21b may vary between the front and back surfaces of the base steel sheet 21a due to the production conditions, for example. The deposition amount of the aluminum-based plating layer 21b may be different between one surface and the other surface of the base steel sheet 21a. The deposition amount W2 of the aluminum-based plating layer 22b of the steel sheet 22 is a mean deposition amount on both surfaces of the base steel sheet 22a. Typically, the deposition amount (g/m²) of the aluminum-based plating layer 22b on one surface of the base steel sheet 22a is substantially equal to the deposition amount (g/m²) of the aluminum-based plating layer 22b on the other surface of the base steel sheet 22a. However, the deposition amount of the aluminum-based plating layer 22b may vary between the front and back surfaces of the base steel sheet 22a due to the production conditions, for example. The deposition amount of the aluminum-based plating layer 22b may be different between one surface and the other surface of the base steel sheet 22a.

The deposition amount W1 of the aluminum-based plating layer 21b of the steel sheet 21 and the deposition amount W2 of the aluminum-based plating layer 22b of the steel sheet 22 may be each 20 g/m² or more and 120 g/m² or less. The deposition amounts W1 and W2 are each preferably 30 g/m² or more, and more preferably 35 g/m² or more. The deposition amounts W1 and W2 are each preferably 115 g/m² or less, and more preferably 100 g/m² or less. The difference between the deposition amounts W1 and W2: W2-W1 is 10 (g/m²) or more, for example. W2-W1 is preferably 20 (g/m²) or more, and more preferably 30 (g/m²) or more. W2-W1 may be 80 (g/m²) or less. W2-W1 is preferably 70 (g/m²) or less, and more preferably 60 (g/m²) or less. Furthermore, the deposition amounts W1 and W2 satisfy a relation that W2/W1 > 1.0. The deposition amounts W1 and W2 can preferably satisfy a relation that W2/W1 ≥ 1.2, and more preferably satisfy a relation that W2/W1 ≥ 1.5.

With reference to FIG. 3D, provided that the deposition amount of the aluminum-based plating layer 23b on both surfaces of the base steel sheet 23a of the steel sheet 23 having the largest sheet thickness tₘₐₓ is W3 (g/m²), the deposition amount W3 of the aluminum-based plating layer 23b of the steel sheet 23 may be less than the deposition amount W2 of the aluminum-based plating layer 22b of the steel sheet 22. The deposition amount W3 of the aluminum-based plating layer 23b is a mean deposition amount on both surfaces of the base steel sheet 23a. Typically, the deposition amount (g/m²) of the aluminum-based plating layer 23b on one surface of the base steel sheet 23a is substantially equal to the deposition amount (g/m²) of the aluminum-based plating layer 23b on the other surface of the base steel sheet 23a. However, the deposition amount of the aluminum-based plating layer 23b may vary between the front and back surfaces of the base steel sheet 23a due to the production conditions, for example. The deposition amount of the aluminum-based plating layer 23b may be different between one surface and the other surface of the base steel sheet 23a.

As with the steel sheets 21 and 22, the deposition amount W3 of the aluminum-based plating layer 23b of the steel sheet 23 may be 20 g/m² or more and 120 g/m² or less, for example. The deposition amount W3 is preferably 30 g/m² or more, and more preferably 35 g/m² or more. The deposition amount W3 is preferably 115 g/m² or less, and more preferably 100 g/m² or less. When W2 > W3, the difference W2-W3 between the deposition amounts W2 and W3 is 10 (g/m²) or more, for example. W2-W3 is preferably 20 (g/m²) or more, and more preferably 30 (g/m²) or more. W2-W3 may be 80 (g/m²) or less. W2-W3 is preferably 70 (g/m²) or less, and more preferably 60 (g/m²) or less. The deposition amount W3 of the aluminum-based plating layer 23b of the steel sheet 23 may be equal to or more than the deposition amount W1 of the aluminum-based plating layer 21b of the steel sheet 21 having the smallest sheet thickness tₘᵢₙ.

Although the method of forming the aluminum-based plating layers 21b, 22b and 23b on the base steel sheets 21a, 22a and 23a, respectively, is not particularly limited, a common hot dipping process is used, for example. Specifically, the aluminum-plated steel sheet 21 having an adjusted deposition amount W1 of the aluminum-based plating layer 21b can be obtained by immersing the base steel sheet 21a in a molten aluminum plating bath and then performing gas wiping with nitrogen or atmosphere, for example. Similarly, the aluminum-plated steel sheet 22 having an adjusted deposition amount W2 of the aluminum-based plating layer 22b can be obtained by immersing the base steel sheet 22a in a molten aluminum plating bath and then performing gas wiping with nitrogen or atmosphere, for example. Furthermore, the aluminum-plated steel sheet 23 having an adjusted deposition amount W3 of the aluminum-based plating layer 23b can be obtained by immersing the base steel sheet 23a in a molten aluminum plating bath and then performing gas wiping with nitrogen or atmosphere, for example. When the aluminum-based plating layer is formed in the hot dipping process, an Al-Fe-based alloy layer is formed at the interface between the base steel sheet and the aluminum-based plating layer, as a result of the elution of Fe in the hot dipping process.

The method of measuring the deposition amounts W1, W2 and W3 of the aluminum-based plating layers 21b, 22b and 23b may be the sodium hydroxide-hexamethylenetetramine and hydrochloric acid peel weigh measuring method described in JIS G 3314: 2019, for example. Specifically, according to JIS G 3314: 2019, five or more test specimens having a predetermined surface area S (mm²) (such as 50 mm × 50 mm) are taken from each of the steel sheets 21, 22 and 22 of the blank 20, and the weight w1 (g) of each test specimen is measured. Then, each test specimen is immersed in a sodium hydroxide solution, and after it is ascertained that the gasification due to the dissolution of the plating ends, the test specimen is removed from the sodium hydroxide solution and rinsed with water. Then, each test specimen still wet after the rinsing is immersed in a hydrochloric acid solution added with hexamethylenetetramine until the gasification due to the dissolution of the plating ends. Each test specimen removed from the hexamethylenetetramine-hydrochloric acid solution is rinsed with water and dried immediately, and the weight w2 (g) of the test specimen is measured again. The deposition amount W (g/m²) of the aluminum-based plating layer of each test specimen can be determined according to {(w1-w2)/S} × 10⁶. A mean value of the deposition amounts W of the five or more test specimens taken from each steel sheet is regarded as the deposition amount of the aluminum-based plating layer of the steel sheet.

However, when the test specimens taken from each of the steel sheets 21, 22 and 22 is small in size, the cross section of each of the aluminum-based plating layers 21b, 22b and 23b may be observed with an optical microscope (area: 100 µm × 100 µm), the thickness (µm) of the plating layer may be measured in three visual fields, and a mean value of the thicknesses measured in the three visual fields may be multiplied by three and converted to the deposition amount. In this case, for each of the steel sheets 21, 22 and 22, the deposition amount is calculated for each surface of the base steel sheet, and a mean value of the calculated deposition amounts (mean value for both surfaces) is regarded as the deposition amount of the aluminum-based plating layer. When there is an Al-Fe-based alloy layer at the interface between the base steel sheet and the aluminum-based plating layer, the thickness of the aluminum-based plating layer includes the thickness of the Al-Fe-based alloy layer. The thickness of the aluminum-based plating layer 21b of the thinnest steel sheet 21 is smaller than the thickness of the aluminum-based plating layer 22b of the steel sheet 22. In this embodiment, the thickness of the aluminum-based plating layer 23b of the thickest steel sheet 23 is also smaller than the thickness of the aluminum-based plating layer 22b of the steel sheet 22. The thicknesses of the aluminum-based plating layers 21b and 23b may be different or the same.

### (Heating Step)

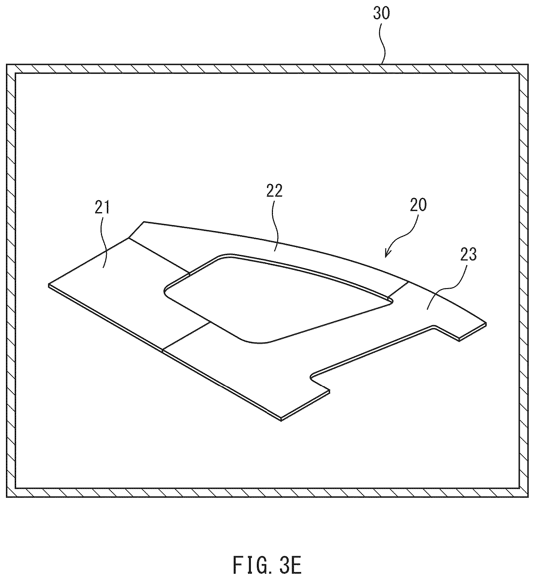

The prepared blank 20 is shaped into the structural member 10 (FIGS. 1 and 2) through hot stamping (hot press working). For the hot stamping, the blank 20 is subjected to the heating step. With reference to FIG. 3E, in the heating step, the blank 20 is heated in a heating furnace 30, for example. The multiple steel sheets 21, 22 and 23 included in the blank 20 are heated to an austenite transformation completion temperature (A_{c3} point) or higher. The steel sheets 21, 22 and 23 are heated to 900°C or more, for example. In this way, the whole or substantially the whole of the microstructure of the steel sheets 21, 22 and 23 is transformed into the austenite phase, for example.

### (Shaping Step)

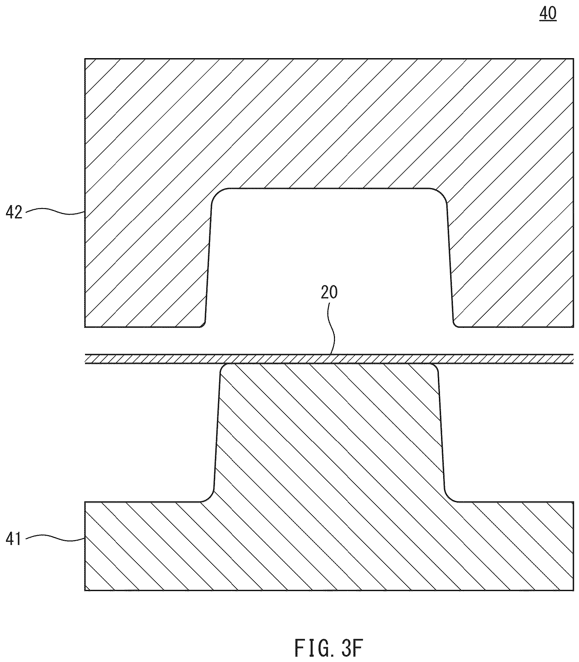

With reference to FIG. 3F, in the shaping step, using press tooling 40, the heated blank 20 is shaped into the structural member 10 having an annular shape in plan view (FIGS. 1 and 2) and quenched. The blank 20 heated in the heating step is removed from the heating furnace 30 (FIG. 3E) and conveyed to the press tooling 40. The press tooling 40 is attached to a well-known pressing device. The press tooling 40 includes a punch 41 and a die 42, for example. The blank 20 is placed between the punch 41 and the die 42.

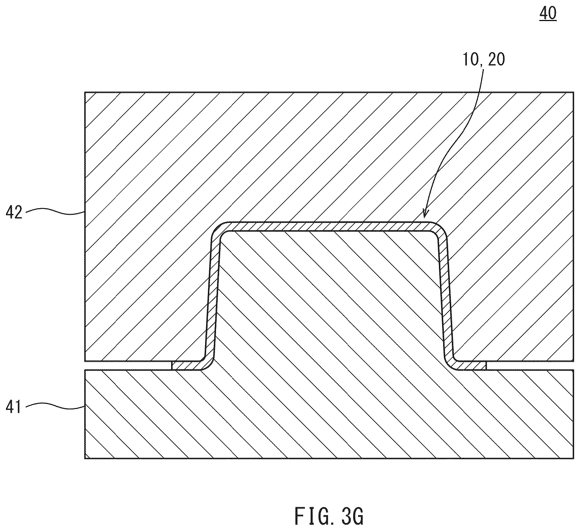

With reference to FIG. 3G, after the blank 20 is placed between the punch 41 and the die 42, the die 42 comes relatively closer to the punch 41. The blank 20 is sandwiched (pressed) between the punch 41 and the die 42 and formed into a shape conforming to the shaping surfaces of the punch 41 and the die 42. The blank 20 is kept being sandwiched between the punch 41 and the die 42. The blank 20 is made to dissipate heat (rapid cooling) in the press tooling 40, and thereby the microstructure thereof is transformed into martensite. In this way, the structural member 10 can be produced from the blank 20.

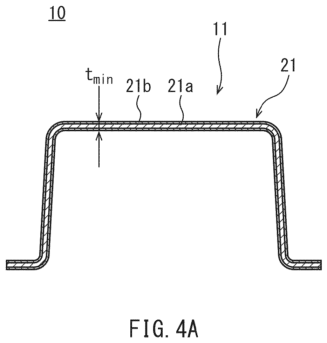

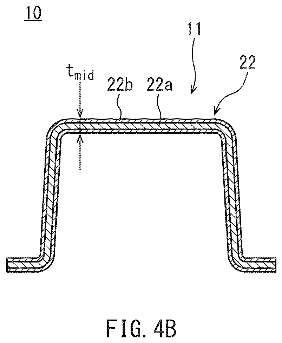

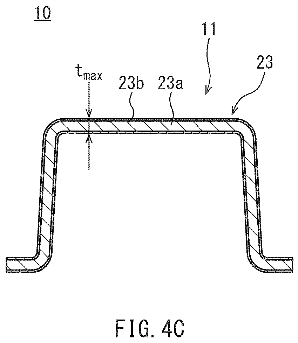

FIGS. 4A to 4C are cross-sectional view of the structural member 10 after the hot stamping. FIG. 4A shows a cross section of the structural member 10 at the position of the steel sheet 21 having the smallest thickness tₘᵢₙ. FIG. 4B shows a cross section of the structural member 10 at the position in the steel sheet 22 having the larger thickness t_{mid} than the steel sheet 21. FIG. 4C shows a cross section of the structural member 10 at the position of the steel sheet 23 having the largest thickness tₘₐₓ.

With reference to FIG. 4A, also in the structural member 10 after the hot stamping, the steel sheet 21 is a plated steel sheet having the aluminum-based plating layers 21b on both surfaces of the base steel sheet 21a. With reference to FIG. 4B, in the structural member 10 after the hot stamping, the steel sheet 22 is a plated steel sheet having the aluminum-based plating layers 22b on both surfaces of the base steel sheet 22a. With reference to FIG. 4C, in the structural member 10 after the hot stamping, the steel sheet 23 is a plated steel sheet having the aluminum-based plating layers 23b on both surfaces of the base steel sheet 23a. However, the aluminum-based plating layers 21b, 22b and 23b in the structural member 10 are more alloyed with iron through the heating step than those in the blank 20 (FIGS. 3B to 3D).

With reference to FIGS. 4A and 4B, provided that a mean thickness (plating thickness) of the aluminum-based plating layers 21b on both surfaces of the steel sheet 21 is K1 (µm), and a mean thickness (plating thickness) of the aluminum-based plating layers 22b on both surfaces of the steel sheet 22 is K2 (µm), the plating thickness K1 of the steel sheet 21 is smaller than the plating thickness K2 of the steel sheet 22. The difference between the plating thicknesses K1 and K2: K2-K1 is 7 (µm) or more, for example. K2-K1 may be 33 (µm) or less. In addition, the plating thicknesses K1 and K2 can satisfy a relation that K2/K1 > 1.0. K2/K1 is preferably 1.2 or more, and more preferably 1.5 or more.

With reference to FIGS. 4B and 4C, in the example of this embodiment, provided that a mean thickness (plating thickness) of the aluminum-based plating layers 23b on both surfaces of the steel sheet 23 is K3 (µm), the plating thickness K3 of the steel sheet 23 is smaller than the plating thickness K2 of the steel sheet 22. The difference between the plating thicknesses K2 and K3: K2-K3 may be 7 (µm) or more, for example. K2-K3 may be 33 (µm) or less.

The plating thicknesses K1, K2 and K3 of the aluminum-based plating layers 21b, 22b and 23b of the structural member 10 can be measured as follows. That is, an automobile body part is disassembled to obtain the annular structural member 10, and an analysis specimen is obtained from the structural member 10 by laser cutting, for example. For example, an analysis specimen is obtained from each of the multiple steel sheets included in the structural member 10. The analysis specimen is taken from a center part or a vicinity thereof of the top plate of each of the steel sheets having an open cross section. For the test specimen taken from each of the multiple steel sheets, the cut surface of the aluminum-based plating layer is etched with nital and then observed with an optical microscope (area: 100 µm × 100 µm), the thickness of the plating layer is measured in three visual fields, and a mean value of the thicknesses of the plating layer measured in the three visual fields can be regarded as the plating thickness. In the outermost layer of the structural member 10, there is often an electrodeposition film or the like, for example. In such a case, the plating layer that exists under the electrodeposition film layer and on the base steel sheet is observed.

In the cross section of the structural member 10 at the position of the steel sheet 21 having the smallest sheet thickness tₘᵢₙ, the variation in martensite fraction is 20 % or less, for example, provided that a value obtained by subtracting the minimum martensite fraction (%) from the maximum martensite fraction (%) is defined as the variation in martensite fraction. The variation in martensite fraction is preferably 15% or less, and more preferably 10% or less. The variation in martensite fraction can be measured as follows. That is, in the cross section of the structural member 10 at the position of the steel sheet 21 having the smallest sheet thickness tₘᵢₙ, ten or more analysis samples (a longer side of which has a length of the order of 10 mm, for example) are cut at positions distant from the ends by 20 mm or more and spaced apart from each other by 10 mm or more, and each analysis sample is mirror-polished and etched with the LePera etchant so that the surface in the sheet thickness direction is an observation surface. Then, the structure at the depth of 1/4 of the sheet thickness from the steel sheet surface (that is, in the region from the depth of 1/8 of the sheet thickness from the steel sheet surface to the depth of 3/8 of the sheet thickness from the steel sheet surface) is photographed with an optical microscope with a magnification of 1000 in thirty visual fields each having structure micrographs of 2400 µm² or more, and the structure photographs obtained are subjected to image analysis.

In an image analysis method, a maximum lightness value Lmax and a minimum lightness value Lmin of the image are obtained from the image, any part having a pixel whose lightness ranges from Lmax-0.3 (Lmax-Lmin) to Lmax is defined as a white region, and the ratio of the number of pixels of the white regions to the total number of pixels is calculated, thereby measuring the martensite fraction. For a total of thirty observation visual fields for each analysis sample, the martensite fraction is determined by this image analysis, and a mean value thereof is regarded as the martensite fraction of the analysis sample. Furthermore, the difference between the maximum value and the minimum value of the martensite fractions of ten or more analysis samples is defined as a variation in martensite fraction in the cross section of the structural member 10 at the position of the steel sheet 21 having the smallest sheet thickness tₘᵢₙ. When the structural member 10 has multiple steel sheets having the smallest sheet thickness tₘᵢₙ, this analysis is performed to determine the martensite fraction for each of these steel sheets, and the maximum variation in martensite fraction among these steel sheets is regarded as the variation in martensite fraction of the structural member 10.

Note that in some steel sheets, the area ratio of martensite obtained by the image analysis, that is, the area ratio of the white region, may include several percent of the area ratio of the retained austenite. However, the influence is small, since the variation in martensite fraction is calculated as a difference.

After the shaping step (hot stamping), the steel sheets 21, 22 and 23 can have a tensile strength of 0.5 GPa or more, for example, and preferably have a tensile strength of 1.0 GPa or more. At least one of the steel sheets 21, 22 and 23 may have a tensile strength of 1.5 GPa or more after the shaping step. The tensile strength of each of the steel sheets 21, 22 and 23 may be the same as or different from the tensile strengths of the other steel sheets.

### [Effects]

In the blank 20 according to this embodiment, the deposition amount W1 of the aluminum-based plating layer 21b of the steel sheet 21 having the smallest sheet thickness tₘᵢₙ is less than the deposition amount W2 of the aluminum-based plating layer 22b of the steel sheet 22 having a larger sheet thickness. As a result, when the blank 20 is heated for the hot stamping, the heating rate of the steel sheet 21 is markedly higher than the heating rate of the steel sheet 22. Specifically, since the aluminum-based plating layer 21b in the outer layer of the steel sheet 21 is relatively thin, when the blank 20 is heated, alloying of the aluminum-based plating layer 21b with iron contained in the base steel sheet 21a quickly proceeds to the surface of the steel sheet 21, and both surfaces of the steel sheet 21 change color to black or a color close to black. That is, the emissivity of both surfaces of the steel sheet 21 increases during the heating step. Therefore, the steel sheet 21 can be more quickly heated to a temperature in the austenite zone, and a longer high temperature retention time of the steel sheet 21 can be ensured. As a result, the austenite grain in the microstructure of the steel sheet 21 is coarsened, and the ferrite transformation region (ferrite nose) in the CCT diagram shifts to longer times. Therefore, the transformation from austenite to ferrite in the steel sheet 21 can be prevented in the period from the removal of the steel sheet 21 from the heating furnace 30 to the start of the shaping with the press tooling 40. Therefore, the shaping of the blank 20 with the press tooling 40 can be started while the microstructure of the steel sheet 21 is kept in the austenite phase, and the hardenability of the steel sheet 21 having the smallest sheet thickness tₘᵢₙ can be improved.

In this embodiment, since the hardenability of the steel sheet 21 having a relatively small thickness is improved, the hardness of the structural member 10 produced from the blank 20 can be made uniform. More specifically, even the steel sheet 21 having the smallest sheet thickness tₘᵢₙ is quenched well, and therefore, the variation in martensite fraction of the steel sheet 21 can be reduced to 20 % or less. As a result, deformation concentration is less likely to occur when an impact load is applied to the structural member 10, for example, and the structural member 10 is more likely to exert high shock absorption performance. Therefore, even when an annular structural member 10, in particular, a large annular structural member 10, that includes a steel sheet 21 having a small sheet thickness is produced from the blank 20, the failure in strength of the structural member 10 can be reduced, and the shock absorption performance of the structural member 10 can be improved.

The smaller the variation in martensite fraction, the more uniform the mechanical characteristics in the structural member 10, so that smaller variations in martensite fraction are preferable from the viewpoint of functionality of the structural member 10. On the other hand, if the variation in martensite fraction is large, it means that poorly hardened parts, that is, low hardness parts, are unevenly distributed in the structural member 10, and deformation is likely to be concentrated in the poor hardness parts at the time of collision deformation of the structural member 10, so that the functionality of the structural member 10 deteriorates.

In this embodiment, since the hardenability of the steel sheet 21 having a relatively small thickness is improved, unevenness of stress in the structural member 10 is also less likely to occur. Therefore, even when the annular structural member 10 is produced from the annular blank 20, torsion is less likely to occur in the structural member 10. Therefore, even when an annular structural member 10, in particular, a large annular structural member 10, that includes a steel sheet 21 having a small sheet thickness is produced from the blank 20, the failure in dimensional accuracy of the structural member 10 can be reduced, and the shock absorption performance of the structural member 10 can be improved.

With the blank 20 according to this embodiment, the deposition amount W1 of the aluminum-based plating layer 21b in the steel sheet 21 having the smallest sheet thickness tₘᵢₙ is less than the deposition amount W2 of the aluminum-based plating layer 22b in the steel sheet 22 having a larger sheet thickness than the steel sheet 21. As a result, the steel sheet 21 can be more quickly heated than the steel sheet 22, and therefore, the high temperature retention time of the steel sheet 21 is longer than when the deposition amount W1 of the aluminum-based plating layer 21b in the steel sheet 21 is equal to or more than the deposition amount W2 of the aluminum-based plating layer 22b in the steel sheet 22. Therefore, after the heating of the blank 20 ends, unevenness of the phase transformation due to the difference in cooling rate between the steel sheets 21, 22 and 23 can be reduced. Specifically, the start of the phase transformation from austenite to ferrite of the steel sheet 21 having the smallest sheet thickness tₘᵢₙ can be delayed, so that the difference in start time of phase transformation between the steel sheet 21 and the other steel sheets 22 and 23 can be reduced. As a result, the hardenability of the steel sheets 21, 22 and 23 included in the blank 20 can be made uniform.

In this embodiment, in the heating step, the steel sheet 21 having the smallest sheet thickness tₘᵢₙ first reaches a temperature in the austenite zone, and the steel sheet 22 having the middle sheet thickness t_{mid} and the steel sheet 23 having the largest sheet thickness tₘₐₓ then reach the temperature in the austenite zone. Here, the ratio of the largest sheet thickness tₘₐₓ to the smallest sheet thickness tₘᵢₙ: tₘₐₓ/tₘᵢₙ is preferably 3.2 or less. In this way, the steel sheet 23 having the sheet thickness tₘₐₓ can be sufficiently heated so that the phase transformation to austenite is completed, before alloying of the aluminum-based plating layer 21b of the steel sheet 21 having the sheet thickness tₘᵢₙ excessively proceeds as a result of the heating, the diffusion layer grows, and the corrosion resistance or the weldability of the plating layer 21b are lost. Therefore, a process window can be ensured in the production of the structural member 10.

### <Second Embodiment>

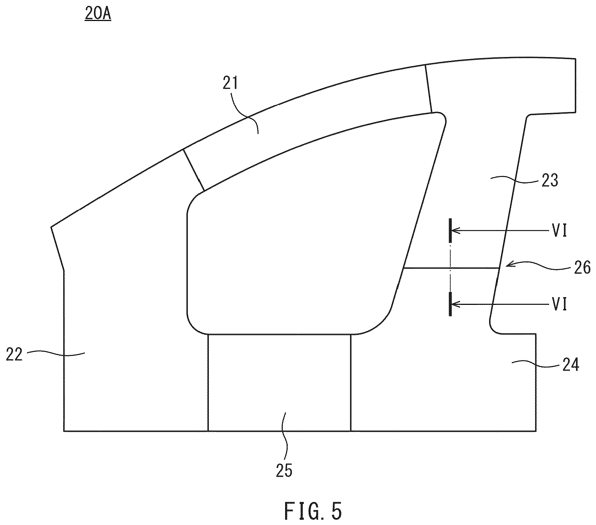

FIG. 5 is a plan view of a blank 20A according to a second embodiment. The blank 20 according to the first embodiment is a so-called tailor welded blank formed by the steel sheets 21, 22 and 23 butt-joined to each other. The blank 20A according to this embodiment mainly differs from the blank 20 according to the first embodiment in how the junctures are made between the steel sheets.

With reference to FIG. 5, the blank 20A includes multiple steel sheets 21, 22, 23, 24 and 25. The steel sheets 21, 22, 23, 24 and 25 are disposed and joined to each other to form an annular shape in plan view of the blank 20. As in the first embodiment, the steel sheet 21 has the smallest sheet thickness tₘᵢₙ and has a less deposition amount of the aluminum-based plating layer than the steel sheet 22. Therefore, the blank 20A according to this embodiment have the same effects as those in the first embodiment.

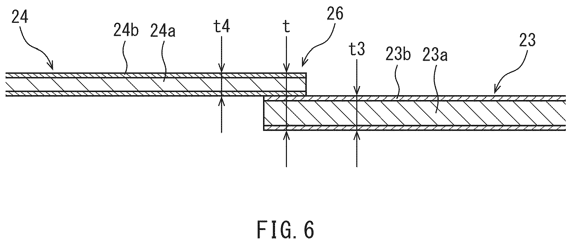

The blank 20A has an overlap part 26. FIG. 6 is a cross-sectional view taken along the line VI-VI in FIG. 5, showing a cross section of the overlap part 26. In this embodiment, the overlap part 26 is formed by laying end parts of adjacent two steel sheets 23 and 24 one on another. The end part of the steel sheet 23 is laid on the end part of the steel sheet 24 and joined thereto. The steel sheets 23 and 24 are joined to each other by spot welding or laser welding, for example.

In the example of this embodiment, the steel sheets 23 and 24 are plated steel sheets. That is, as in the first embodiment, the steel sheet 23 includes a base steel sheet 23a and an aluminum-based plating layer 23b. Similarly, the steel sheet 24 includes a base steel sheet 24a and an aluminum-based plating layer 24b. The base steel sheets 23a and 24a may be steel sheets of the same kind or may be steel sheets of different kinds. Similarly, the aluminum-based plating layers 23b and 24b may be the same plating layers of the same kind or may be plating layers of different kinds.

The overlap part 26 has a total sheet thickness t. The total sheet thickness t is the sum of a sheet thickness t3 of the steel sheet 23 and a sheet thickness t4 of the steel sheet 24. The total sheet thickness t includes the thicknesses of the aluminum-based plating layers 23b and 24b of the steel sheets 23 and 24. The total sheet thickness t of the overlap part 26 is more than 2.5 mm, for example. The total sheet thickness t of the overlap part 26 is preferably 4.0 mm or less. In this case, provided that the deposition amount of the aluminum-based plating layer 23b on both surfaces of the base steel sheet 23a of the steel sheet 23 is W3 (g/m²), and the deposition amount of the aluminum-based plating layer 24b on both surfaces of the base steel sheet 24a of the steel sheet 24 is W4 (g/m²), the deposition amounts W3 and W4 are less than the deposition amount W2 of the aluminum-based plating layer 22b on both surfaces of the base steel sheet 22a of the steel sheet 22 (FIGS. 3B and 3D).

The deposition amount W3 of the aluminum-based plating layer 23b of the steel sheet 23 is a mean deposition amount on both surfaces of the base steel sheet 23a. Typically, the deposition amount (g/m²) of the aluminum-based plating layer 23b on one surface of the base steel sheet 23a is substantially equal to the deposition amount (g/m²) of the aluminum-based plating layer 23b on the other surface of the base steel sheet 23a. However, the deposition amount of the aluminum-based plating layer 23b may vary between the front and back surfaces of the base steel sheet 23a due to the production conditions, for example. The deposition amount of the aluminum-based plating layer 23b may be different between one surface and the other surface of the base steel sheet 23a. The deposition amount W4 of the aluminum-based plating layer 24b of the steel sheet 24 is a mean deposition amount on both surfaces of the base steel sheet 24a. Typically, the deposition amount (g/m²) of the aluminum-based plating layer 24b on one surface of the base steel sheet 24a is substantially equal to the deposition amount (g/m²) of the aluminum-based plating layer 24b on the other surface of the base steel sheet 24a. However, the deposition amount of the aluminum-based plating layer 24b may vary between the front and back surfaces of the base steel sheet 24a due to the production conditions, for example. The deposition amount of the aluminum-based plating layer 24b may be different between one surface and the other surface of the base steel sheet 24a. The deposition amounts W3 and W4 may be each 20 g/m² or more and 120 g/m² or less. The deposition amounts W3 and W4 are each preferably 30 g/m² or more, and more preferably 35 g/m² or more. The deposition amounts W3 and W4 are each preferably 115 g/m² or less, and more preferably 100 g/m² or less. The difference between the deposition amounts W2 and W3 of the steel sheets 22 and 23: W2-W3 is 20 (g/m²) or more, for example. W2-W3 may be 80 (g/m²) or less. Similarly, the difference between the deposition amounts W2 and W4 of the steel sheets 22 and 24: W2-W4 is 20 (g/m²) or more, for example. W2-W4 may be 80 (g/m²) or less. The deposition amount W3 of the aluminum-based plating layer 23b of the steel sheets 23 and the deposition amount W4 of the aluminum-based plating layer 24b of the steel sheet 24 may be the same or may be different. Furthermore, the sheet thickness t3 of the steel sheet 23 and the sheet thickness t4 of the steel sheet 24 may be the same or may be different. The sheet thickness t3 of the steel sheet 23 and the sheet thickness t4 of the steel sheet 24 are mean sheet thicknesses of the steel sheets 23 and 24, respectively, and include the thicknesses of the aluminum-based plating layers 23b and 24b, respectively.

The deposition amount W3 of the aluminum-based plating layer 23b of the steel sheet 23 and the deposition amount W4 of the aluminum-based plating layer 24b of the steel sheet 24 can be measured in the method described in the first embodiment.

When the total sheet thickness t of the overlap part 26 is more than 2.5 mm, for example, the temperature of the overlap part 26 is slow to rise. Therefore, when the blank 20A is heated for the hot stamping, alloying of the aluminum-based plating layer 21b of the steel sheet 21 having the smallest sheet thickness tₘᵢₙ (FIGS. 3B and 3C) may proceed and the diffusion layer may grow before the overlap part 26 reaches a temperature in the austenite zone, and the corrosion resistance or the weldability of the steel sheet 21 may be unable to be ensured. However, in this embodiment, the emissivity of the overlap part 26 is increased to promote heating, so that even when the total sheet thickness t of the overlap part 26 is more than 2.5 mm, for example, the overlap part 26 can be sufficiently heated until the phase transformation to austenite is completed, before alloying of the aluminum-based plating layer 21b of the steel sheet 21 proceeds, the diffusion layer excessively grows, and the corrosion resistance or the weldability are lost. Therefore, a process window can be ensured in the production of the structural member.

With the blank 20A according to this embodiment, the steel sheet 21 may be butt-joined to the steel sheets 22 and 23 or may form the overlap part 26 with one or both of the steel sheets 22 and 23. The steel sheet 25 may be butt-joined to the steel sheets 22 and 24 or may form the overlap part 26 with one or both of the steel sheets 22 and 24.

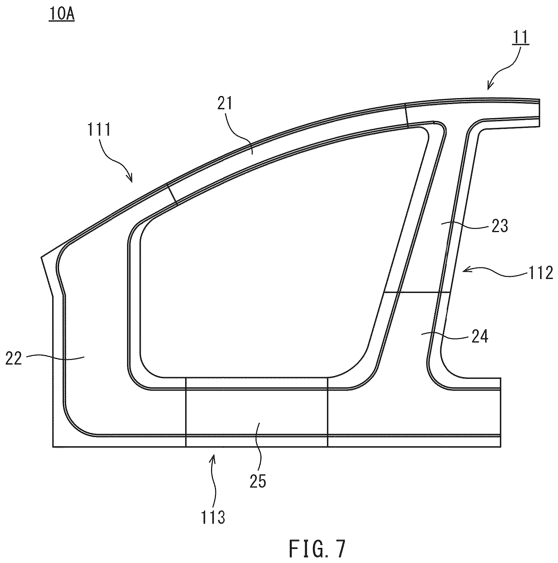

FIG. 7 is a plan view of a structural member 10A produced from the blank 20A. The structural member 10A generally has the same configuration as the structural member 10 according to the first embodiment (FIGS. 1 and 2). However, in the structural member 10A, a member main body 11 is formed of five steel sheets 21, 22, 23, 24 and 25. The method of producing the structural member 10A from the blank 20A is the same as the method in the first embodiment.

The structural member 10A can have the same size as the structural member 10 according to the first embodiment. Specifically, the size of the structural member 10A having an annular shape in plan view is 1.0 m or more and 4.0 mm or less, for example. In the structural member 10A, the steel sheets 21, 22, 23, 24 and 25 each have an open cross section, as with the steel sheets in the first embodiment. The steel sheets 21, 22, 23, 24 and 25 may each have a generally hat-like shape in cross-sectional view of the structural member 10A, for example.

Although not shown, in the structural member 10A, the width of the steel sheet 21 located at an upper part of a front pillar 111 is 15 mm or more and 300 mm or less, for example. The height of the steel sheet 21 may be 10 mm or more and 150 mm or less. In the structural member 10A, the width of the steel sheet 22 located at a lower part of the front pillar 111 is 30 mm or more and 750 mm or less, for example. The height of the steel sheet 22 may be 25 mm or more and 150 mm or less. In the structural member 10A, the width of the steel sheets 23 and 24 located at the center pillar 112 is 15 mm or more and 300 mm or less, for example. The height of the steel sheets 23 and 24 may be 10 mm or more and 150 mm or less. In the structural member 10A, the width of the steel sheet 25 located at the position of the rocker 113 is 30 mm or more and 300 mm or less, for example. The height of the steel sheet 25 may be 25 mm or more and 150 mm or less.

### <Third Embodiment>

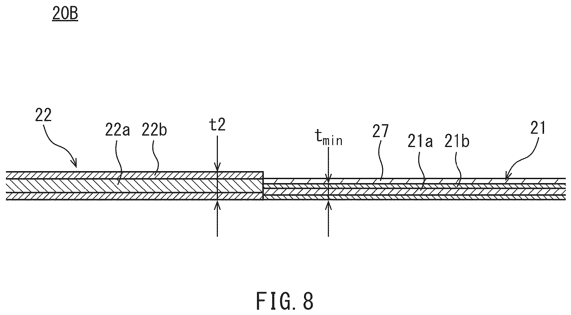

FIG. 8 is a cross-sectional view of a blank 20B according to a third embodiment. FIG. 8 shows a juncture of a steel sheet 21 having the smallest sheet thickness tₘᵢₙ and a steel sheet 22 having a larger sheet thickness t2 in the blank 20B. The example shown in FIG. 8 differs from the example of the first embodiment shown in FIG. 3B only in configuration of the steel sheet 21.

In this embodiment, one surface of the steel sheet 21 is coated with a film 27 that is substantially black in color. On the other hand, the steel sheet 22 is provided with no film 27 that is substantially black in color. When the lightness L* value of the surface of the film 27 (CIE 1976 lightness index L* defined in JIS Z8781-4: 2013) is 60 or less, for example, the film 27 can be determined to be black in color. The film 27 is provided over the whole of the surface of the steel sheet 21. The film 27 may be a surface-treated carbon-based film (a film containing carbon (C)). Since the surface of the steel sheet 21 is provided with such a black film 27, the emissivity of the surface of the steel sheet 21 is higher than the emissivity of both surfaces of the steel sheet 22. For example, at a measurement temperature of 25°C and a wavelength of 8.0 µm, the emissivity of the surface of the steel sheet 21 is higher than the emissivity of both surfaces of the steel sheet 22. The difference in emissivity between the steel sheets 21 and 22 at the temperature of 25°C and the wavelength of 8.0 µm is preferably more than 5%, more preferably more than 10%, and even more preferably more than 20%.

As the film 27, a surface-treated film described in International Application Publication No. WO2022/215229 can be used, for example. Specifically, the film 27 may contain carbon black, for example. The film 27 may further contain a metal oxide. The metal oxide is one or more oxides selected from among the group consisting of Zr oxide, Zn oxide and Ti oxide, for example. The film 27 may contain silica.

The film 27 may contain graphite, soot or the like, instead of or in addition to carbon black. Alternatively, in order to increase the emissivity of the steel sheet 21, the film 27 may contain an acicular compound having a hexagonal crystal structure having an aspect ratio of 4 or more and 50 or less, for example. The compound having a hexagonal crystal structure is typically graphite (C). However, the compound may be lanthanum silicate, magnesium diboride, beryllium oxide (beryllia), zinc oxide, β-quartz, millerite (NiS), wurtzite (ZnS) or the like.

In this embodiment, the black film 27 is provided on one surface of the steel sheet 21 having the smallest sheet thickness tₘᵢₙ. As a result, the emissivity of the surface of the steel sheet 21 can be increased in advance, so that the temperature of the steel sheet 21 more quickly rises when the blank 20B is heated for the hot stamping. Therefore, a longer high temperature retention time of the steel sheet 21 can be ensured. In this way, the hardenability of the thinnest steel sheet 21 can be further improved.

In this embodiment, only one surface of the steel sheet 21 is coated with the film 27. However, both surfaces of the steel sheet 21 may be coated with the film 27. The thickness of the film 27 is 0.5 µm or more and 5.0 µm or less, for example. The thickness of the film 27 is preferably 1.0 µm or more and 3.0 µm or less. The thickness of the film 27 is small enough to be negligible compared with the sheet thickness tₘᵢₙ of the steel sheet 21. Therefore, the measured sheet thickness of the steel sheet 21 including the film 27 can be treated as the sheet thickness tₘᵢₙ of the steel sheet 21.

### <Fourth Embodiment>

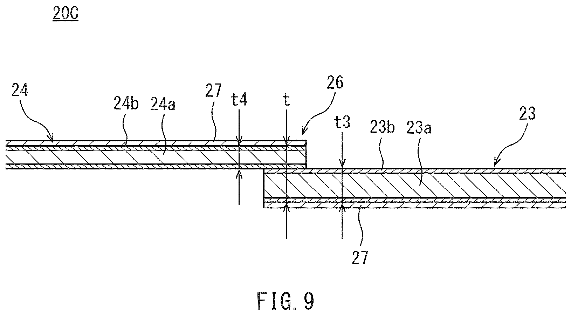

FIG. 9 is a cross-sectional view of a blank 20C according to a fourth embodiment. FIG. 9 shows an overlap part 26 formed by steel sheets 23 and 24 in the blank 20C. The example shown in FIG. 9 differs from the example of the second embodiment (FIG. 6) in that the overlap part 26 is provided with films 27 described in the third embodiment.

In this embodiment, a surface of each of the steel sheets 23 and 24 that is located on the outer side of the overlap part 26 is coated with a film 27 that is substantially black in color. With the steel sheet 23, the whole of a surface opposite to the other steel sheet 24 is coated with the film 27. With the steel sheet 24, the whole of a surface opposite to the other steel sheet 23 is coated with the film 27. That is, the surfaces of the steel sheets 23 and 24 that form the front and back surfaces of the overlap part 26 are each coated with the film 27. As a result, the emissivity of the overlap part 26 can be increased, so that the temperature of the overlap part 26 can be more quickly raised when the blank 20C is heated for the hot stamping. Therefore, the overlap part 26 can be heated to a temperature in the austenite zone before alloying of the aluminum-based plating layer 21b of the steel sheet 21 having the sheet thickness tₘᵢₙ (FIGS. 3B and 3C) excessively proceeds, and a structural member 10 with the corrosion resistance or weldability of the steel sheet 21 maintained can be produced. Therefore, a process window can be easily ensured in the production of the structural member 10.

In the example shown in FIG. 9, the surface of each of the steel sheets 23 and 24 that is located on the outer side of the overlap part 26 is coated with the film 27 that is substantially black in color. However, it is also possible that although the surface of one of the steel sheets 23 and 24 that is located on the outer side of the overlap part 26 is coated with the film 27, the surface of the other of the steel sheets 23 and 24 that is located on the outer side of the overlap part 26 is not coated with the film 27. Furthermore, in the example shown in FIG. 9, the surface of each of the steel sheets 23 and 24 that is located on the inner side of the overlap part 26 is not coated with the film 27 that is substantially black in color. However, in each of the steel sheets 23 and 24, the surface located on the inner side of the overlap part 26 may also be coated with the film 27. However, from the viewpoint of making heating of the blank 20C uniform in the hot stamping, it is preferred that the surface of each of the steel sheets 23 and 24 that is located on the outer side of the overlap part 26 is coated with the film 27, and the surface located on the inner side of the overlap part 26 is not coated with the film 27.

Although embodiments of the present disclosure have been described above, the present disclosure is not limited to the embodiments described above, and various modifications can be made without departing from the spirit of the present disclosure.

In the first embodiment described above, an example has been described in which not only the deposition amount W1 of the aluminum-based plating layer 21b of the steel sheet 21 having the smallest sheet thickness tₘᵢₙ but also the deposition amount W3 of the aluminum-based plating layer 23b of the steel sheet 23 having the largest sheet thickness tₘₐₓ is less than the deposition amount W2 of the aluminum-based plating layer 22b of another steel sheet 22. However, the deposition amount W3 of the aluminum-based plating layer 23b of the steel sheet 23 having the largest sheet thickness tₘₐₓ may be equal to or more than the deposition amount W2 of the aluminum-based plating layer 22b of the steel sheet 22. In that case, in the structural member 10 after the hot stamping, the plating thickness K3 of the steel sheet 23 is also equal to or more than the plating thickness K2 of the steel sheet 22. It is essential only that among the multiple steel sheets 21, 22 and 23 forming the blank 20, at least the deposition amount W1 of the aluminum-based plating layer 21b of the steel sheet 21 having the smallest sheet thickness tₘᵢₙ is less than the deposition amount W2 of the aluminum-based plating layer 22b of the steel sheet 22.

In the first embodiment described above, the blank 20 includes three steel sheets 21, 22 and 23. In the second embodiment described above, the blank 20A includes five steel sheets 21, 22, 23, 24 and 25. However, the number of steel sheets included in the blanks 20 and 20A is not limited to these. The blanks 20 and 20A have only to include the steel sheet 21 having the smallest sheet thickness tₘᵢₙ and the steel sheet 22 having a sheet thickness larger than the sheet thickness tₘᵢₙ. Furthermore, it is essential only that the deposition amount W1 of the aluminum-based plating layer 21b of the steel sheet 21 having the smallest sheet thickness tₘᵢₙ is less than the deposition amount W2 of the aluminum-based plating layer 22b of the steel sheet 22. The steel sheet 21 is directly or indirectly joined to the steel sheet 22. The blanks 20 and 20A having an annular shape in plan view can typically include three or more steel sheets. In the blanks 20 and 20A, the deposition amount of the aluminum-based plating layer in the steel sheets other than the steel sheets 21 and 22 is not particularly limited. The steel sheets other than the steel sheets 21 and 22 may be aluminum-plated steel sheets, other plated steel sheets or steel sheets with no plating layers on the surfaces thereof (bare materials). In the blanks 20 and 20A having an annular shape, the arrangement of the multiple steel sheets including the steel sheets 21 and 22 is not particularly limited.

When any of the blanks 20 and 20A includes multiple steel sheets 21 having the smallest sheet thickness tₘᵢₙ, the deposition amount W1 of the aluminum-based plating layer 21b of all the steel sheets 21 is preferably less than the deposition amount W2 of the aluminum-based plating layer 22b of another steel sheet 22. The deposition amounts W1 of the aluminum-based plating layer 21b of the steel sheets 21 may be the same or may be different. When there are multiple steel sheets 21 having the smallest sheet thickness tₘᵢₙ, the difference between the deposition amount W1 of the aluminum-based plating layer 21b of the steel sheet 21 and the deposition amount W2 of the aluminum-based plating layer 22b of the steel sheet 22: W2-W1 is calculated by referring to the largest one of the deposition amounts W1 of the aluminum-based plating layer 21b of the multiple steel sheets 21.

In the first embodiment described above, the press tooling 40 used for hot stamping of the blank 20 includes the punch 41 and the die 42. However, the configuration of the press tooling 40 is not limited to the example described in the first embodiment. The press tooling 40 may further include a pad or a blank holder, for example.

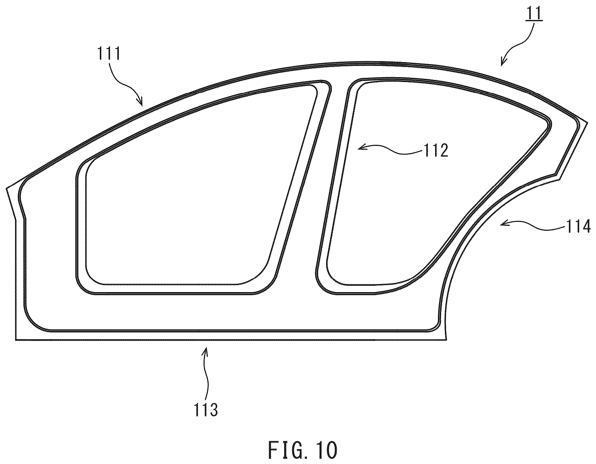

In the embodiments described above, the main body 11 of the structural members 10 and 10A includes the front pillar 111, the center pillar 112 and the rocker 113. However, the member main body 11 may further include another component. For example, as shown in FIG. 10, the member main body 11 may further include a rear pillar 114. The structural members 10 and 10A according to the embodiments described above are door ring parts (single door ring parts) having a single ring shape. On the other hand, the structural member shown in FIG. 8 is a door ring part (double door ring part) having a double ring shape. When producing the double door ring part, the blank used as the starting material also has the double ring shape.

### EXAMPLES

In the following, the present disclosure will be described in more detail with reference to examples. However, the present disclosure is not limited to the examples described below.

### [First Example]

In order to check the effects of the present disclosure, using commercially available software (AUTOFORM R. 10 available from AUTOFORM), CAE analysis of the press forming (hot stamping) of structural members that were single door ring parts was performed for different types (types of starting materials) and sheet thicknesses of steel sheets included in the structural members and different division patterns of the structural members.

Table 1 shows the steel sheets used in this analysis.

### [Table 1]

**TABLE 1**

| Symbol | Type of starting material | Base material | Plating amount on one side, g/m² |
|---|---|---|---|
| A120 | Al-Si 1.5G HS | Steel sheet for 1.5 GPa class hot stamping | 120 |
| A100 | Al-Si 1.5G HS | Steel sheet for 1.5 GPa class hot stamping | 100 |
| A80 | Al-Si 1.5G HS | Steel sheet for 1.5 GPa class hot stamping | 80 |
| A60 | Al-Si 1.5G HS | Steel sheet for 1.5 GPa class hot stamping | 60 |
| A40 | Al-Si 1.5G HS | Steel sheet for 1.5 GPa class hot stamping | 40 |
| A80-1 | Black film (one side) Al-Si 1.5G HS | Steel sheet for 1.5 GPa class hot stamping | 80 |
| A40-1 | Black film (one side) Al-Si 1.5G HS | Steel sheet for 1.5 GPa class hot stamping | 40 |
| A40-2 | Black film (both sides) Al-Si 1.5G HS | Steel sheet for 1.5 GPa class hot stamping | 40 |
| A60-G | GA 1.5G HS | Steel sheet for 1.5 GPa class hot stamping | 60 |
| B120 | Al-Si 2.0G HS | Steel sheet for 2.0 GPa class hot stamping | 120 |
| B60 | Al-Si 2.0G HS | Steel sheet for 2.0 GPa class hot stamping | 60 |
| B80 | Al-Si 2.0G HS | Steel sheet for 2.0 GPa class hot stamping | 80 |
| B40 | Al-Si 2.0G HS | Steel sheet for 2.0 GPa class hot stamping | 40 |
| B40-1 | Black film (one side) Al-Si 2.0G HS | Steel sheet for 2.0 GPa class hot stamping | 40 |
| B40-2 | Black film (both sides) Al-Si 2.0G HS | Steel sheet for 2.0 GPa class hot stamping | 40 |
| B60-G | GA 2.0G HS | Steel sheet for 2.0 GPa class hot stamping | 60 |
| C80 | Al-Si 2.5G HS | Steel sheet for 2.5 GPa class hot stamping | 80 |
| C60 | Al-Si 2.5G HS | Steel sheet for 2.5 GPa class hot stamping | 60 |
| C40 | Al-Si 2.5G HS | Steel sheet for 2.5 GPa class hot stamping | 40 |
| C40-2 | Black film (both sides) Al-Si 2.5G HS | Steel sheet for 2.5 GPa class hot stamping | 40 |
| D80 | Al-Si 1.0G HS | Steel sheet for 1.0 GPa class hot stamping | 80 |
| D40 | Al-Si 1.0G HS | Steel sheet for 1.0 GPa class hot stamping | 40 |
| D40-2 | Black film (both sides) Al-Si 1.0G HS | Steel sheet for 1.0 GPa class hot stamping | 40 |
| E80 | Al-Si 0.5G HS | Steel sheet for 0.5 GPa class hot stamping | 80 |
| E40 | Al-Si 0.5G HS | Steel sheet for 0.5 GPa class hot stamping | 40 |
| E40-2 | Black film (both sides) Al-Si 0.5G HS | Steel sheet for 0.5 GPa class hot stamping | 40 |

In Table 1, the "type of starting material" shows type of plating, tensile strength and use (hot stamping) in this order. However, for cases where a black film containing carbon (C) is provided on a plating layer, a term "black film (one side)" or "black film (both sides)" is shown before type of starting material. The "black film (one side)" means that the whole of one surface of the plated steel sheet is coated with a black film. The "black film (both sides)" means that the whole of both surfaces of the plated steel sheet is coated with a black film. Although Table 1 shows values of the deposition amount of the plating layer per side, the deposition amount of the plating layer is the same on both surfaces of the starting material in this analysis.

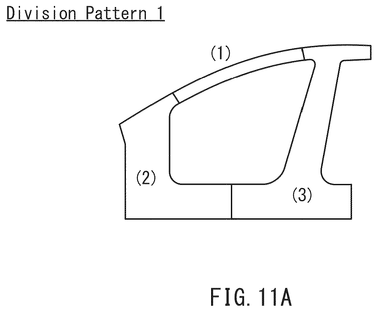

FIGS. 11A to 11G show division patterns of the structural member. FIGS. 11A to 11G show the number of steel sheets (starting materials) included in the structural members that are single door ring parts and the positions of the junctures between the steel sheets in the structural members. In FIGS. 11A to 11G, each steel sheet is denoted by a numeral in parentheses.

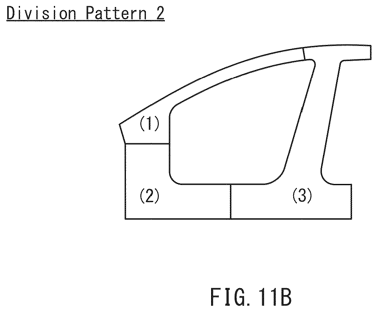

Table 2 shows analysis conditions and results for division patterns 1 and 2 shown in FIGS. 11A and 11B. In FIGS. 11A and 11B, the structural member is formed of three starting materials (1) to (3).

### [Table 2]

**TABLE 2**

| Symbol | Division pattern | Starting material (1) | | Starting material (2) | | Starting material (3) | | Start time of phase transformation, s | Time required to reach 910°C, s | Difference in plating thickness, g/m² |
|---|---|---|---|---|---|---|---|---|---|---|
| | | Type of starting material | Sheet thickness, mm | Type of starting material | Sheet thickness, mm | Type of starting material | Sheet thickness, mm | | | |
| Example 1 | 1 | B80 | 1.4 | D80 | 1.4 | B40 | 1.2 | 20.2 | 129.0 | 40 |
| Example 2 | 1 | B40 | 1.2 | D40 | 1.3 | A80 | 1.6 | 20.3 | 129.0 | 40 |
| Example 3 | 2 | A80 | 1.6 | D40 | 1.2 | A80 | 1.8 | 20.4 | 129.0 | 40 |
| Comparative example 1 | 1 | B80 | 1.2 | D80 | 1.4 | B80 | 1.6 | 17.8 | 149.5 | 0 |
| Comparative example 2 | 2 | A80 | 1.6 | D80 | 1.2 | A80 | 1.8 | 18.6 | 149.5 | 0 |

With reference to Table 2, in Example 1, the deposition amount of the aluminum-based plating layer on both surfaces of the base steel sheet was small for a starting material (3) having the smallest sheet thickness tₘᵢₙ: 1.2 mm among starting materials (1) to (3), and was large for the other starting materials (1) and (2) having a larger sheet thickness than the starting material (3). In Example 2, the deposition amount of the aluminum-based plating layer was small for a starting material (1) having the smallest sheet thickness tₘᵢₙ: 1.2 mm among starting materials (1) to (3), and was large for another starting material (3) having a larger sheet thickness than the starting material (1). In Example 3, the deposition amount of the aluminum-based plating layer was small for a starting material (2) having the smallest sheet thickness tₘᵢₙ: 1.2 mm among starting materials (1) to (3), and was large for the other starting materials (1) and (3) having a larger sheet thickness than the starting material (2). On the other hand, in Comparative examples 1 and 2, the deposition amount of the aluminum-based plating layer was the same for starting materials (1) to (3).

In Table 2, "time required to reach 910°C" means the time required to reach 910°C by the first starting material to be heated to 910°C (A_{c3} point or higher) after the start of heating of the blank among the starting materials included in the blank. "Start time of phase transformation" means the shortest time until the phase transformation to ferrite starts after the blank is heated at a furnace temperature of 920°C for five minutes and thirty seconds and then removed from the heating furnace. "Difference in plating thickness" means the difference between the deposition amount of the aluminum-based plating layer of the starting material having the smallest sheet thickness tₘᵢₙ and the deposition amount of the aluminum-based plating layer of the starting material having a larger sheet thickness (the largest deposition amount in the case where there are multiple starting materials having a sheet thickness larger than the sheet thickness tₘᵢₙ and the deposition amount of the aluminum-based plating layer varies between these starting materials). Table 2 shows that in Examples 1 to 3 in which the deposition amount of the aluminum-based plating layer of the thinnest starting material was less than the deposition amount of the aluminum-based plating layer of one or more other starting materials, the time required to reach 910°C was 20 seconds or more shorter than in Comparative examples 1 and 2, and the heating rate of the thinnest starting material in the heating step was increased. Furthermore, in Examples 1 to 3, the start time of phase transformation was more than 20 seconds and was delayed compared with Comparative examples 1 and 2. Therefore, the blank is more likely to start being shaped before the start of ferrite transformation, and the blank can be uniformly quenched in the shaping step.

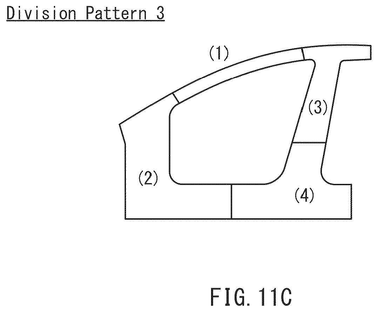

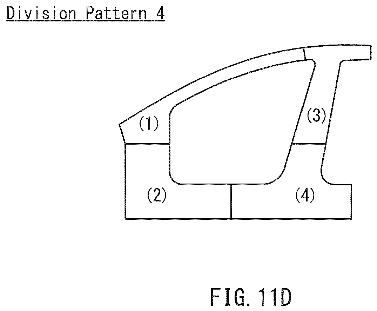

Table 3 shows analysis conditions and results for division patterns 3 and 4 shown in FIGS. 11C and 11D. In FIGS. 11C and 11D, the structural member is formed of four starting materials (1) to (4).

### [Table 3]

**TABLE 3**

| Symbol | Division pattern | Starting material (1) | | Starting material (2) | | Starting material (3) | | Starting material (4) | | Start time of phase transformation, s | Time required to reach 910°C, s | Difference in plating thickness, g/m² |
|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | | | |
| Example 4 | 3 | C40-2 | 1.2 | A40 | 1.3 | A80 | 1.8 | A80 | 1.4 | 23.2 | 95.0 | 40 |
| Example 5 | 4 | B80 | 1.6 | B40-2 | 1.2 | B80 | 1.8 | C80 | 1.4 | 23.0 | 95.0 | 40 |
| Example 6 | 4 | B60-G | 1.6 | A120 | 1.4 | A80 | 1.8 | A40 | 1.2 | 20.1 | 129.0 | 80 |
| Example 7 | 3 | B40 | 1.2 | D80 | 1.4 | B80 | 1.8 | D40 | 1.2 | 20.2 | 129.0 | 40 |
| Example 8 | 4 | A80 | 1.6 | C40 | 1.2 | B80 | 2.6 | A40 | 1.2 | 20.3 | 129.0 | 40 |
| Example 9 | 4 | A60-G | 1.6 | B80 | 1.4 | B40 | 1.2 | D80 | 1.4 | 20.2 | 129.0 | 40 |
| Example 10 | 4 | A80 | 1.6 | A40-2 | 1.2 | B40-2 | 1.2 | A80 | 1.4 | 23.0 | 95.0 | 40 |
| Comparative example 3 | 3 | C80 | 1.2 | A80 | 1.3 | A80 | 1.8 | A80 | 1.4 | 19.0 | 149.5 | 0 |
| Comparative example 4 | 4 | B80 | 1.6 | B80 | 1.2 | B80 | 1.8 | C80 | 1.4 | 17.8 | 149.5 | 0 |
| Comparative example 5 | 4 | B60-G | 1.6 | A80 | 1.4 | A80 | 1.8 | A80 | 1.2 | 18.0 | 149.5 | 0 |
| Comparative example 6 | 3 | B80 | 1.2 | D80 | 1.4 | B80 | 1.8 | D80 | 1.2 | 17.8 | 149.5 | 0 |
| Comparative example 7 | 4 | A80 | 1.6 | C80 | 1.2 | B80 | 2.6 | A80 | 1.2 | 17.7 | 149.5 | 0 |

With reference to Table 3, in Examples 4 to 10, the deposition amount of the aluminum-based plating layer of the starting material(s) having the smallest sheet thickness tₘᵢₙ among starting materials (1) to (4) was less than the deposition amount of the aluminum-based plating layer of one or more other starting materials. When there were multiple starting materials having the smallest sheet thickness tₘᵢₙ, the deposition amount of the aluminum-based plating layer of all those starting materials was less than the deposition amount of the aluminum-based plating layer of the starting material(s) having a larger sheet thickness. On the other hand, in Comparative examples 3 to 7, the deposition amount of the aluminum-based plating layer of the starting material(s) having the smallest sheet thickness tₘᵢₙ among starting materials (1) to (4) was equal to or more than the deposition amount of the aluminum-based plating layer of the other starting materials. Note that in Examples 6 and 9 and Comparative example 5, the starting material (1) was a galvannealed steel sheet (GA steel sheet).

Table 3 shows that in Examples 4 to 10, the time required to reach 910°C was 20 seconds or more shorter than in Comparative examples 3 to 7, and the heating rate of the thinnest starting material in the heating step was increased. Furthermore, in Examples 4 to 10, the start time of phase transformation was more than 20 seconds and was delayed compared with Comparative examples 3 to 7. Therefore, the blank is more likely to start being shaped before the start of ferrite transformation, and the blank can be uniformly quenched in the shaping step.

In Examples 4, 5 and 10, both surfaces of the starting material having the smallest sheet thickness tₘᵢₙ were coated with a black film. In Examples 4, 5 and 10, the time required to reach 910°C was 20 seconds or more shorter than in Examples 6 to 9, in which the starting material having the smallest sheet thickness tₘᵢₙ was not provided with the black film, and the heating rate of the thinnest starting material in the heating step was further increased. Furthermore, in Examples 4, 5 and 10, the start time of phase transformation was also delayed compared with Examples 6 to 9. Therefore, the emissivity of the surfaces of the starting material having the smallest sheet thickness tₘᵢₙ is increased in advance by the black film, so that the starting material can be more quickly heated, and the start of transformation to the ferrite phase can be further delayed.

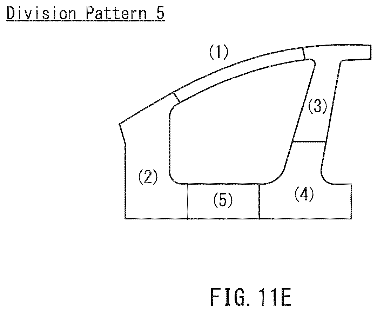

Table 4 shows analysis conditions and results for division patterns 5 to 7 shown in FIGS. 11E to 11G. In FIGS. 11E to 11G, the structural member is formed of five starting materials (1) to (5).

### [Table 4]

**TABLE 4**

| Symbol | Division pattern | Starting material (1) | | Starting material (2) | | Starting material (3) | | Starting material (4) | | Starting material (5) | | Start time of phase transformation, s | Time required to reach 910°C, s | Difference in plating thickness, g/m² |
|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | |
| Example 11 | 5 | A40 | 1.2 | A80 | 1.6 | C80 | 1.4 | A40 | 1.2 | A80 | 1.4 | 20.3 | 129.0 | 40 |
| Example 12 | 5 | A40-1 | 1.2 | B80 | 1.6 | C40 | 1.2 | D80 | 1.8 | B40-1 | 1.2 | 21.9 | 108.0 | 40 |
| Example 13 | 7 | A40 | 1.2 | C40 | 1.2 | A80 | 1.8 | B40 | 1.0 | D80 | 1.4 | 18.1 | 107.0 | 40 |
| Example 14 | 7 | C40-2 | 1.2 | B80 | 1.6 | B80 | 1.4 | A40 | 1.2 | A80 | 1.4 | 21.2 | 129.0 | 40 |
| Example 15 | 6 | B80 | 1.6 | B80 | 1.4 | A80 | 1.6 | D40 | 1.2 | B80 | 1.4 | 20.1 | 129.0 | 40 |
| Comparative example 8 | 5 | A80 | 1.2 | A80 | 1.6 | C80 | 1.4 | A80 | 1.2 | A80 | 1.4 | 17.7 | 149.5 | 0 |
| Comparative example 9 | 5 | A80 | 1.2 | B80 | 1.6 | C80 | 1.2 | D80 | 1.8 | B80 | 1.2 | 17.8 | 149.5 | 0 |
| Comparative example 10 | 7 | C80 | 1.2 | B80 | 1.6 | B80 | 1.4 | A80 | 1.2 | A80 | 1.4 | 17.7 | 149.5 | 0 |
| Comparative example 11 | 6 | B80 | 1.6 | B80 | 1.4 | A80 | 1.6 | D80 | 1.2 | B80 | 1.4 | 18.0 | 149.5 | 0 |

With reference to Table 4, in Examples 11 to 15, the deposition amount of the aluminum-based plating layer of the starting material(s) having the smallest sheet thickness tₘᵢₙ among starting materials (1) to (5) was less than the deposition amount of the aluminum-based plating layer of one or more other starting materials. When there were multiple starting materials having the smallest sheet thickness tₘᵢₙ, the deposition amount of the aluminum-based plating layer of all those starting materials was less than the deposition amount of the aluminum-based plating layer of the starting material(s) having a larger sheet thickness. On the other hand, in Comparative examples 8 to 11, the deposition amount of the aluminum-based plating layer was the same for the starting materials (1) to (5).

Table 4 shows that in Examples 11 to 15, the time required to reach 910°C was 20 seconds or more shorter than in Comparative examples 8 to 11, and the heating rate of the thinnest starting material in the heating step was increased. Furthermore, in Examples 11 to 15, the start time of phase transformation was delayed compared with Comparative examples 8 to 11. Therefore, the blank is more likely to start being shaped before the start of ferrite transformation, and the blank can be uniformly quenched in the shaping step.

In Examples 12 and 14, one or both surfaces of the starting material (1) having the smallest sheet thickness tₘᵢₙ were coated with a black film. In Example 12, one surface of the starting material (5) having the smallest sheet thickness tₘᵢₙ was also coated with a black film. For example, comparing Example 12 with Comparative example 9 in which the same combination of the division pattern, the type of starting material (except for the plating amount) and the sheet thickness was used, the time required to reach 910°C was 40 seconds or more shorter and the thinnest starting material was markedly more quickly heated in the example 12 in the heating step. Furthermore, in Example 12, the start time of phase transformation was obviously delayed compared with Comparative example 9. Therefore, the emissivity of the surface of the starting material having the smallest sheet thickness tₘᵢₙ is increased in advance by the black film, so that the starting material can be more quickly heated, and the start of transformation to the ferrite phase can be further delayed.

In the examples and the comparative examples shown in Tables 2 to 4, the starting materials were butted on each other and then joined by laser welding (butt-joint). On the other hand, in the examples shown in Table 5 described below, some starting materials were joined by spot welding, for example, to form an overlap part.

### [Table 5]

**TABLE 5**

| Symbol | Division pattern | Starting material (1) | | Starting material (2) | | Starting material (3) | | Starting material (4) | | Starting material (5) | | Start time of phase transformatio n, s | Time required to reach 910°C, s | Difference in plating thickness, g/m² |
|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | |
| Example 16 | 6 | A80 | 1.6 | A40 | 1.6 | C40 | 1.4 | A40-2 | 1.2 | A40 | 1.4 | 22.0 | 95.0 | 40 |
| Example 17 | 5 | B80 | 1.4 | A40 | 1.4 | C40 | 1.4 | D40 | 1.2 | A40 | 1.2 | 20.2 | 129.0 | 40 |
| Example 18 | 6 | A100 | 1.6 | B80 | 1.6 | A60 | 1.4 | A40-2 | 1.2 | A60 | 1.4 | 22.0 | 95.0 | 60 |
| Example 19 | 5 | B60 | 1.4 | A60 | 1.4 | A60 | 1.4 | D40 | 1.2 | A40 | 1.2 | 20.2 | 129.0 | 20 |
| Comparative example 12 | 6 | A80 | 1.2 | A80 | 1.6 | C80 | 1.4 | A80 | 1.2 | A80 | 1.4 | 17.7 | 149.5 | 0 |
| Comparative example 13 | 5 | B80 | 1.6 | A80 | 1.4 | B80 | 1.6 | D80 | 1.2 | A80 | 1.4 | 17.8 | 149.5 | 0 |
| Comparative example 14 | 5 | B60 | 1.6 | A60 | 1.4 | B40 | 1.6 | D80 | 1.2 | A60 | 1.4 | 17.8 | 149.5 | -20 |

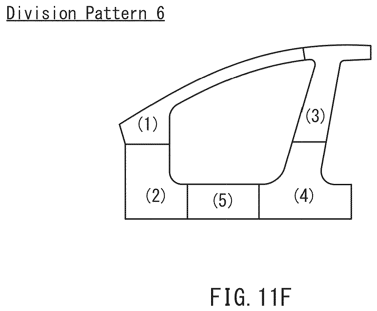

With reference to Table 5 and FIG. 11F, in Examples 16 and 18 and Comparative example 12, starting materials (2) and (5), starting materials (3) and (4), and starting materials (4) and (5) each form an overlap part at the juncture therebetween. With reference to Table 5 and FIG. 11E, in Examples 17 and 19 and Comparative examples 13 and 14, starting materials (2) and (5) and starting materials (3) and (4) each form an overlap part at the juncture therebetween.

With reference to Table 5, in Examples 16 to 19, the deposition amount of the aluminum-based plating layer of the starting material(s) having the smallest sheet thickness tₘᵢₙ among starting materials (1) to (5) was less than the deposition amount of the aluminum-based plating layer of the other starting materials having a larger sheet thickness. In Examples 16 and 17, the difference in plating thickness between the thinnest starting material and the other starting materials was 40 g/m². In Examples 18 and 19, the differences in plating thickness between the thinnest starting material and the other starting materials were 60 g/m² and 20 g/m², respectively. On the other hand, in Comparative examples 12 and 13, the deposition amount of the aluminum-based plating layer was the same for the starting materials (1) to (5). In Comparative example 14, the deposition amount of the aluminum-based plating layer of the starting material (4) having the smallest sheet thickness tₘᵢₙ was more than the deposition amount of the aluminum-based plating layer of other starting materials (1), (2) and (5) having a larger sheet thickness. In Comparative example 14, the difference in plating thickness between the thinnest starting material and the other starting materials was -20 g/m².

Table 5 shows that in Examples 16 to 19, the time required to reach 910°C was 20 seconds or more shorter than in Comparative examples 12 to 14, and the start time of phase transformation was also delayed compared with Comparative examples 12 to 14. Therefore, it was ascertained that even when the blank includes an overlap part, the same effects as those in the case of the butt joint are achieved by reducing the deposition amount of the aluminum-based plating layer of the thinnest starting material. In particular, in Examples 16 to 18 in which both surfaces of the thinnest starting material were provided with a black film, the time required to reach 910°C was 40 seconds or more shorter than in Comparative examples 12 to 14, and the start time of phase transformation was further delayed compared with Comparative examples 12 to 14.

In Example 19, the difference in plating thickness between the thinnest starting material and the other starting materials was relatively small as 20 g/m². In Example 19, again, it was ascertained that the time required to reach 910°C was markedly shorter than in Comparative examples 12 to 14, and the start time of phase transformation was also significantly delayed compared with Comparative examples 12 to 14.

### [Second Example]

The same analysis as in the first example was performed of the press forming (hot stamping) of structural members that were double door ring parts for different types and sheet thicknesses of starting materials included in the structural members and different division patterns of the structural members.

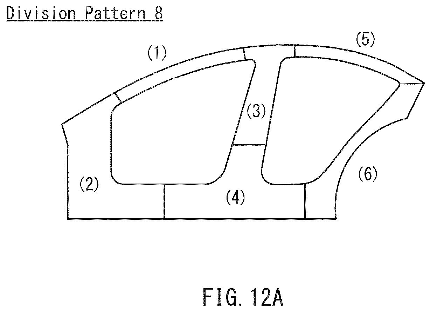

The steel sheets as the starting materials were selected from those shown in Table 1, as in the first embodiment. The division patterns of the structural members are shown in FIGS. 12A to 12D. FIGS. 12A to 12D show the number of steel sheets (starting materials) included in the structural members that are double door ring parts and the positions of the junctures between the steel sheets in the structural members. In FIGS. 12A to 12D, each steel sheet as the starting material is denoted by a numeral in parentheses.

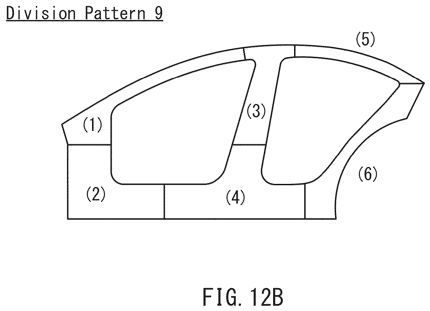

Table 6 shows analysis conditions and results for division patterns 8 and 9 shown in FIGS. 12A and 12B. In FIGS. 12A and 12B, the structural member is formed of six starting materials (1) to (6).

### [Table 6]

**TABLE 6**

| Symbol | Division pattern | Starting material (1) | | Starting material (2) | | Starting material (3) | | Starting material (4) | | Starting material (5) | | Starting material (6) | | Start time of phase transformation, s | Time required to reach 910°C, s | Difference in plating thickness, g/m² |
|---|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | |
| Example 20 | 8 | C80 | 1.6 | A80 | 1.4 | A80 | 1.8 | D80 | 1.4 | B40 | 1.0 | D40 | 1.2 | 18.4 | 107.0 | 40 |
| Example 21 | 8 | A80 | 1.6 | B40-1 | 1.3 | B80 | 1.8 | A80 | 1.4 | A40 | 1.2 | A40 | 1.0 | 18.6 | 99.0 | 40 |
| Example 22 | 9 | B60 | 1.6 | A60 | 1.4 | C60 | 1.8 | B60 | 1.4 | B40 | 1.0 | A40 | 1.0 | 18.2 | 107.0 | 20 |
| Comparative example 15 | 8 | C80 | 1.6 | A80 | 1.4 | A80 | 1.8 | D80 | 1.4 | B80 | 1.0 | D80 | 1.2 | 16.5 | 124.5 | 0 |
| Comparative example 16 | 9 | B60 | 1.6 | A60 | 1.4 | C60 | 1.8 | B60 | 1.4 | B80 | 1.0 | A80 | 1.0 | 15.8 | 124.5 | -20 |

With reference to Table 6, in Examples 20 to 22, the deposition amount of the aluminum-based plating layer of the starting material having the smallest sheet thickness tₘᵢₙ among the starting materials (1) to (6) was less than the deposition amount of the aluminum-based plating layer of one or more starting materials having a larger sheet thickness. In Examples 20 to 22, the difference in plating thickness was 20 g/m² or more. On the other hand, in Comparative example 15, the deposition amount of the aluminum-based plating layer was the same for the starting materials (1) to (6). In Comparative example 16, the deposition amount of the aluminum-based plating layer of the other starting materials was more than the deposition amount of the aluminum-based plating layer of the starting material having the smallest sheet thickness tₘᵢₙ, and the difference in plating thickness was - 20 g/m².

Table 6 shows that in Examples 20 to 22, the time required to reach 910°C was approximately 20 seconds shorter than in Comparative examples 15 and 16, and the heating rate of the thinnest starting material in the heating step was increased. Furthermore, in Examples 20 to 22, the start time of phase transformation was delayed compared with Comparative examples 15 and 16. It can be said that as a result of reducing the deposition amount of the aluminum-based plating layer of the thinnest starting material, the blank is more likely to start being shaped before the start of ferrite transformation, and the blank can be uniformly quenched in the shaping step.

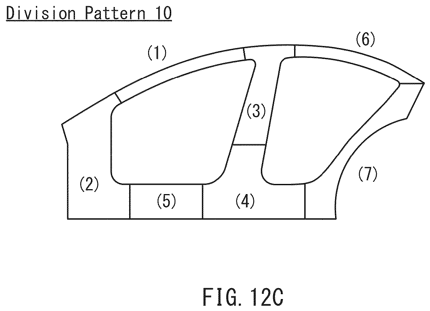

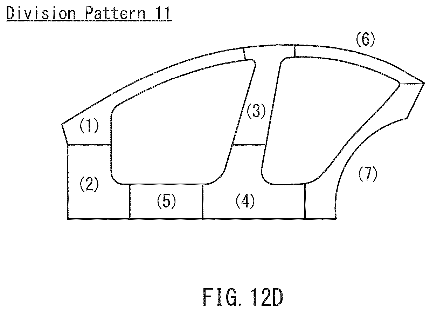

Table 7 shows analysis conditions and results for division patterns 10 and 11 shown in FIGS. 12C and 12D. In FIGS. 12C and 12D, the structural member is formed of seven starting materials (1) to (7).

### [Table 7]

**TABLE 7**

| Symbol | Division pattern | Starting material 1) | | Starting material 2) | | Starting material (3) | | Starting material (4) | | Starting material (5) | | Starting material (6) | | Starting material (7) | | Start time of phase transformation, s | Time required to reach 910°C, s | Difference in plating thickness, g/m² |
|---|---|---|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | |
| Example 23 | 10 | C80 | 1.6 | A80 | 1.4 | A80 | 1.8 | D40 | 1.2 | D40-2 | 1.4 | B40 | 1.2 | D40 | 1.0 | 17.9 | 107.0 | 40 |
| Example 24 | 10 | A80 | 1.6 | A80 | 1.4 | B80 | 1.8 | A40-1 | 1.2 | B40-1 | 1.2 | A40-1 | 1.2 | A40-1 | 1.2 | 18.4 | 108.0 | 40 |
| Example 25 | 11 | B80 | 1.6 | B40 | 1.3 | C80 | 1.8 | E40-2 | 1.2 | A40-2 | 1.2 | B40-2 | 1.2 | A40-1 | 1.0 | 18.6 | 89.5 | 40 |
| Comparative example 17 | 10 | C80 | 1.6 | A80 | 1.4 | A80 | 1.8 | D80 | 1.2 | D80 | 1.4 | B80 | 1.2 | D80 | 1.2 | 17.4 | 149.5 | 0 |
| Comparative example 18 | 11 | B80 | 1.6 | A80 | 1.4 | C80 | 1.8 | E80 | 1.2 | A80 | 1.2 | B80 | 1.2 | A80 | 1.0 | 15.8 | 124.5 | 0 |

With reference to Table 7, in Examples 23 to 25, the deposition amount of the aluminum-based plating layer of the starting materials having the smallest sheet thickness tₘᵢₙ among starting materials (1) to (7) was less than the deposition amount of the aluminum-based plating layer of one or more starting materials having a larger sheet thickness. On the other hand, in Comparative examples 17 and 18, the deposition amount of the aluminum-based plating layer was the same for the starting materials (1) to (7).

Table 7 shows that in Examples 23 to 25, the time required to reach 910°C was shorter than in Comparative examples 17 and 18, and the heating rate of the thinnest starting material in the heating step was increased. Furthermore, in Examples 23 to 25, the start time of phase transformation was delayed compared with Comparative examples 17 and 18. Therefore, the blank is more likely to start being shaped before the start of ferrite transformation, and the blank can be uniformly quenched in the shaping step.

### [Third Example]

In order to check the effect of the sheet thickness on the press forming (hot stamping) of structural members that are single door ring parts, the same analysis as in the first example was performed for different combinations of starting materials and different ways of joining. Table 8 shows analysis conditions and results.

### [Table 8]

**TABLE 8**

| Symbol | Divisio n pattern | Starting material (1) | | Starting material (2) | | Starting material (3) | | Starting material (4) | | Starting material 5) | | Smallest sheet thicknes s tₘᵢₙ | Largest sheet thicknes s tₘₐₓ | Sheet thicknes s ratio tₘₐₓ/tₘᵢₙ | Largest total sheet thicknes s t | Time require d to reach 910°C, s | Differenc e in plating thickness, g/m² | PW,s | Heatin g time |
|---|---|---|---|---|---|---|---|---|---|---|---|---|---|---|---|---|---|---|---|
| | | Type of starting materia l | Sheet thickness , mm | Type of starting materia l | Sheet thickness , mm | Type of starting materia l | Sheet thickness , mm | Type of starting materia l | Sheet thickness , mm | Type of starting materia l | Sheet thickness , mm | | | | | | | | |
| Test example l | 7-Overlap | A40 | 1.6 | A40 | 1.4 | C40 | 1.2 | A80 | 1.4 | A40 | 1.4 | 1.2 | 1.6 | 1.3 | 3.0 | 129.0 | 40 | 51.0 | 323.0 |
| Test example 2 | 7- Butt | A40 | 1.6 | A80 | 1.4 | C40 | 1.2 | A80 | 1.4 | A80 | 1.4 | 1.2 | 1.6 | 1.3 | 1.6 | 129.0 | 40 | 174. 5 | 199.5 |
| Test example 3 | 7- Butt | A80 | 1.6 | A80 | 1.4 | A40 | 3.2 | A40 | 1.1 | A80 | 1.4 | 1.1 | 3.2 | 2.9 | 3.2 | 118.0 | 40 | 7.8 | 355.3 |
| Test example 4 | 5-Overlap | C40 | 1.2 | B80 | 1.6 | B40 | 2.0 | A40-2 | 1.8 | A120 | 1.6 | 1.2 | 2.0 | 1.7 | 3.8 | 129.0 | 80 | 32.0 | 342.0 |
| Test example 5 | 7-Overlap | A40 | 1.0 | A80 | 1.4 | A40 | 3.3 | A40-2 | 1.0 | A80 | 1.4 | 1.0 | 3.3 | **3.3** | **4.3** | 78.0 | 40 | -32.3 | 355.3 |
| Test example 6 | 7- Butt | A80 | 1.6 | A80 | 1.4 | A40 | 3.3 | A40-1 | 1.0 | A80 | 1.4 | 1.0 | 3.3 | **3.3** | 3.3 | 89.5 | 40 | -19.3 | 353.8 |
| Reference example 1 | 5-Overlap | C80 | 1.4 | A80 | 1.4 | A80 | 1.4 | D80 | 1.4 | B80 | 1.4 | 1.4 | 1.4 | 1.0 | 2.8 | 174.5 | 0 | 70.0 | 349.5 |

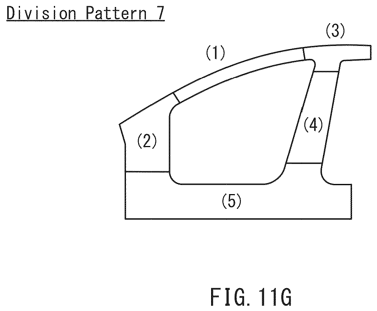

The division pattern in Test examples 1 and 5 was the division pattern 7 shown in FIG. 11G. The division pattern in Test example 4 was the division pattern 5 shown in FIG. 11E. In Test examples 1, 4 and 5, some starting materials form an overlap part at the juncture therebetween. More specifically, in Test examples 1 and 5, starting materials (1) and (2), starting materials (1) and (3), starting materials (2) and (5) and starting materials (4) and (5) each form an overlap part at the juncture therebetween. In Test example 4, starting materials (1) and (2), starting materials (1) and (3), starting materials (3) and (4) and starting materials (2) and (5) each form an overlap part at the juncture therebetween. In any of these test examples, the deposition amount of the aluminum-based plating layer of the starting material(s) having the smallest sheet thickness tₘᵢₙ was less than the deposition amount of the aluminum-based plating layer of one or more starting materials having a larger sheet thickness.

The division pattern in Test examples 2, 3 and 6 was the division pattern 7 shown in FIG. 11G. In Test examples 2, 3 and 6, the starting materials were butt-joined to each other. In any of these test examples, the deposition amount of the aluminum-based plating layer of the starting material having the smallest sheet thickness tₘᵢₙ was less than the deposition amount of the aluminum-based plating layer of one or more starting materials having a larger sheet thickness.

In Table 8, "process window (PW)" means a value obtained by subtracting the time required for the whole of the blank to reach 910°C after the first to reach 910°C among the starting materials included in the blank reaches 910° from the allowable heating duration of the first starting material after reaching 910°C. If the process window is 5 seconds or less, it means that alloying of the plating layer of the first starting material to reach 910°C in the heating step proceeds, the corrosion resistance of the plating layer cannot be ensured, and it is difficult to produce the structural member of high quality.

As shown in Table 8, in Test examples 5 and 6 in which the ratio of the largest sheet thickness tₘₐₓ to the smallest sheet thickness tₘᵢₙ: tₘₐₓ/tₘᵢₙ was more than 3.2, the process window was negative, and a process window required for production of the structural member of high quality was not able to be ensured. On the other hand, in Test examples 1 to 4 in which tₘₐₓ/tₘᵢₙ was 3.2 or less, a process window of 5 seconds or more was able to be ensured.

As shown in Table 8, in Test example 5 in which the largest total sheet thickness t of the overlap part was more than 4.0 mm, the process window was negative, and a process window required for production of the structural member of high quality was not able to be ensured. On the other hand, in Test examples 1 and 4 in which the largest total sheet thickness t of the overlap part was 4.0 mm or less, a process window of 5 seconds or more was able to be ensured.

In Reference example 1, which is an example of the division pattern 5 as with Test example 4, the deposition amount of the aluminum-based plating layer does not vary between the starting materials. In the Reference example 1, however, the sheet thickness also does not vary between the starting materials, and the problem of the proceeding of alloying of the plating layer of the thinnest starting material does not occur, so that a process window of 5 seconds or more was able to be ensured.

In Test examples 1 to 4 and Comparative examples 11 and 13A, the blank was heated at a heating furnace temperature of 920°C for a time required for the whole of the blank to reach 910°, then conveyed to the pressing device in 17 seconds, subjected to hot stamping at a forming rate of 40 mm/s, and kept at the bottom dead center under a pressure of 3000 kN for 20 seconds, thereby producing a hot-stamped structural member. From the thinnest part of these structural members, analysis samples were taken in the method described in the embodiments described above, and variations in martensite fraction were measured. In addition, shape accuracy measurement and shock absorption performance measurement of these structural members were performed. Table 9 shows evaluation results.

### [Table 9]

**TABLE 9**

| Symbol | Division pattern | Variation in martensite fraction | Shape accuracy | Evaluation of SOL maximum amount of intrusion | Evaluation of side-collision maximum amount of intrusion | Total evaluation |
|---|---|---|---|---|---|---|
| Test example 1 | 7- Overlap | 10% | ○ | good | good | good |
| Test example 2 | 7- Butt | 8% | ○ | good | better | better |
| Test example 3 | 7- Butt | 18% | Δ | marginal | marginal | marginal |
| Test example 4 | 5- Overlap | 12% | ○ | good | good | good |
| Comparative example 11 | 7- Butt | 25% | × | poor | poor | poor |
| Comparative example 13A | 5-Overlap | 46% | × | poor | poor | poor |

In Table 9, as described in the above embodiments, the variation in martensite fraction is a value obtained by subtracting the minimum martensite fraction (%) from the maximum martensite fraction (%) in the cross section of the structural member at the position of the starting material having the smallest sheet thickness tₘᵢₙ.

The shape accuracy was evaluated according to the extent to which the structural member having a generally hat-like shape in cross-sectional view placed on another structural member deviates from the other structural member at a part where the structural member is overlaid on the other structural member. In Table 9, ○ is shown when the distance from the surface of the other structural member is within the range of ±2.0 mm, Δ is shown when the distance is out of the range of ±2.0 mm and within the range of ±3.0 mm, and × is shown when the distance is out of the range of ±3.0 mm.

Concerning the shock absorption performance, assuming the small overlap (SOL) collision and the side collision with the structural member assembled to a vehicle, an impactor simulating a vehicle was made to collide with the structural member, and the maximum amount of intrusion in the SOL collision (SOL maximum amount of intrusion) and the maximum amount of intrusion in the side collision (side-collision maximum amount of intrusion) were evaluated. The shock absorption performance was evaluated by comparison with a reference shock absorption performance, which was the shock absorption performance of a door ring part formed by shaping each of the starting materials by hot stamping and then joining the shaped starting materials. In Table 9, a shock absorption performance equivalent to the reference shock absorption performance is shown as good, a shock absorption performance more excellent than the reference shock absorption performance is shown as better, a shock absorption performance slightly lower than the reference shock absorption performance is shown as marginal, and shock absorption performance even lower than the reference shock absorption performance is shown as poor.

In Comparative example 11, which is Comparative example 11 in the first example, the starting materials were butt-joined using laser as in Test example 2. In Comparative example 13A, the same set of sheets as in Comparative example 13 of in the first example was used, some starting materials were lap-joined to each other as in Test example 4. In Comparative examples 11 and 13A, unlike the test examples, the deposition amount of the plating layer of the thinnest starting material is equal to the deposition amount of the plating layer of the other starting materials. As shown in Table 9, in any of Test examples 1 to 4, the variation in martensite fraction was 20% or less, and the variation in martensite fraction was significantly reduced compared with Comparative examples 11 and 13A. In Test examples 1 to 4, the shape accuracy was also better than in Comparative examples 11 and 13A.

In Test examples 1 to 4 in which the variation in martensite fraction was small, the shock absorption performance was also improved compared with Comparative examples 11 and 13A. In particular, in Test examples 1, 2 and 4 in which the variation in martensite fraction was 15% or less, a shock absorption performance higher than the reference shock absorption performance was able to be ensured. That is, although the annular structural member was produced from a blank formed by integrating multiple starting materials, a shock absorption performance equivalent to or higher than the shock absorption performance of a structural member produced by joining separately press-formed starting materials was able to be ensured. Among Test examples 1 to 4, the shock absorption performance in Test example 2 was the best. In Test example 2, in particular, a high shock absorption performance was exerted in side collision.

### REFERENCE SIGNS LIST

- 10, 10A:: structural member
- 11:: member main body
- 20, 20A, 20B, 20C:: blank
- 21:: steel sheet (first steel sheet)
- 21a:: base steel sheet
- 21b:: aluminum-based plating layer
- 22:: steel sheet (second steel sheet)
- 22a:: base steel sheet
- 22b:: aluminum-based plating layer
- 23:: steel sheet (third steel sheet)
- 23a:: base steel sheet
- 23b:: aluminum-based plating layer
- 24,:: steel sheet
- 24a:: base steel sheet
- 24b:: aluminum-based plating layer
- 25:: steel sheet
- 26:: overlap part
- 27:: film
- 40:: press tooling
- 111:: front pillar
- 112:: center pillar
- 113:: rocker

## Claims

1. A blank for hot stamping, comprising:
multiple steel sheets that are disposed to form an annular shape in plan view of the blank and joined to each other,
wherein the multiple steel sheets include:
a first steel sheet having a smallest sheet thickness among the multiple steel sheets; and
a second steel sheet having a sheet thickness larger than the sheet thickness of the first steel sheet,
the first steel sheet and the second steel sheet are each a plated steel sheet that has a base steel sheet and an aluminum-based plating layer that covers both surfaces of the base steel sheet, and
a deposition amount (g/m²) of the aluminum-based plating layer on both surfaces of the base steel sheet of the first steel sheet is less than a deposition amount (g/m²) of the aluminum-based plating layer on both surfaces of the base steel sheet of the second steel sheet.

2. The blank according to Claim 1, wherein provided that the sheet thickness of the first steel sheet is tₘᵢₙ, and a sheet thickness of a steel sheet having a largest sheet thickness among the multiple steel sheets is tₘₐₓ, 1.0 < tₘₐₓ/tₘᵢₙ ≤ 3.2.

3. The blank according to Claim 1, further comprising:
an overlap part that is formed by end parts of adjacent two steel sheets among the multiple steel sheets overlaid on one another, the overlap part having a total sheet thickness of 4.0 mm or less,
wherein the two steel sheets are each a plated steel sheet that has a base steel sheet and an aluminum-based plating layer that covers both surfaces of the base steel sheet, and
a deposition amount (g/m²) of the aluminum-based plating layer on both surfaces of the base steel sheet of each of the two steel sheets is less than the deposition amount (g/m²) of the aluminum-based plating layer on both surfaces of the base steel sheet of the second steel sheet.

4. The blank according to Claim 3, wherein a surface of at least one of the two steel sheets that is located on an outer side of the overlap part is coated with a film that is black in color.

5. The blank according to Claim 1, wherein at least one surface of the first steel sheet is coated with a film that is black in color.

6. A production method for a structural member, comprising:
a step of preparing the blank according to any one of Claims 1 to 5;
a step of heating the multiple steel sheets included in the blank to an austenite transformation completion temperature or higher; and
a step of shaping and quenching the heated blank into a structural member having an annular shape in plan view with press tooling.

7. A structural member, comprising:
a member main body that is formed of multiple steel sheets joined to each other and has an annular shape in plan view, the multiple steel sheets including a first steel sheet having a smallest sheet thickness and a second steel sheet having a sheet thickness larger than the sheet thickness of the first steel sheet,
wherein the first steel sheet and the second steel sheet are each a plated steel sheet that has an aluminum-based plating layer on both surfaces of a base steel sheet, and
a thickness of the aluminum-based plating layer of the first steel sheet is smaller than a thickness of the aluminum-based plating layer of the second steel sheet.

8. The structural member according to Claim 7, wherein the structural member is a door ring part of an automobile, and
the member main body includes a front pillar, a center pillar and a rocker that connects the front pillar and the center pillar to each other.
